# EUROPÄISCHE PATENTSCHRIFT

(11) **EP 2 229 427 B1**
(45) Veröffentlichungstag und Bekanntmachung des Hinweises auf die Patenterteilung: **18.07.2012**
(21) Anmeldenummer: 08870991.0
(22) Anmeldetag: 23.12.2008
(51) Int. Cl.: C09K 19/34, C09K 19/42

(54) **FLÜSSIGKRISTALLINES MEDIUM**
LIQUID-CRYSTAL MEDIUM
MILIEU CRISTALLIN LIQUIDE

(30) Priorität: 14.01.2008 DE 102008004157
(43) Veröffentlichungstag der Anmeldung: 22.09.2010
(73) Patentinhaber: Merck Patent GmbH, 64293 Darmstadt (DE)
(72) Erfinder: LUESSEM, Georg, 86199 Augsburg (DE); HOCK, Christian, 63814 Mainaschaff (DE); SCHULER, Brigitte, 63762 Grossostheim (DE); POETSCH, Eike, 64367 Mühltal (DE)
(86) Internationale Anmeldenummer: PCT/EP2008/011070
(87) Internationale Veröffentlichungsnummer: WO 2009/089898

(56) Entgegenhaltungen:
- EP-A- 1 813 662
- WO-A-2005/081215
- DE-A1-102004 021 334
- US-A1- 2006 278 850
- US-A1- 2007 001 149

## Beschreibung

Die vorliegende Erfindung betrifft ein flüssigkristallines Medium, dessen Verwendung für elektrooptische Zwecke und dieses Medium enthaltende Anzeigen, sowie ein Verfahren zur Herstellung des flüssigkristallinen Mediums.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringerem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfemseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen, wie sie in z. B. Armbanduhren und Taschenrechnern verwendet werden, bekannt. Jedoch ist das Prinzip auch auf hochwertige, höher auflösende Aktiv-Matrix angesteuerte Anzeigen wie z. B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d · Δn) zu erreichen. Diese geringe optische Verzögerung führt zu einer meist akzeptablen geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- lagerstabil, auch bei extrem tiefen Temperaturen
- Schaltbarkeit bei extrem tiefen Temperaturen (out-door-use, Automobil, Avionik)
- erhöhte Beständigkeit gegenüber UV-Strahlung (längere Lebensdauer)
- kleine optische Doppelbrechung (Δn) für reflektive Anzeigen

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannung und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße, und vorzugsweise gleichzeitig sehr niedrige Schwellenspannungen, niedrige Viskositäten und hohe Werte für die Voltage Holding Ratio (VHR) aufweisen.

Es wurde nun gefunden, dass diese Aufgabe gelöst werden kann, wenn man in Anzeigen erfindungsgemäße Medien verwendet.

Gegenstand der Erfindung ist somit ein flüssigkristallines Medium, bevorzugt auf der Basis eines Gemisches von polaren Verbindungen mit positiver dielektrischer Anisotropie, das dadurch gekennzeichnet ist, dass es eine oder mehrere Verbindungen der Formel I 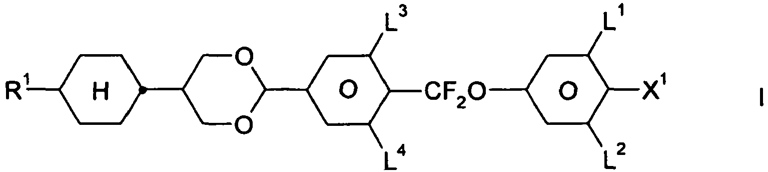 und eine oder mehrere Verbindungen ausgewählt aus den Verbindungen der Formeln IA und IB, 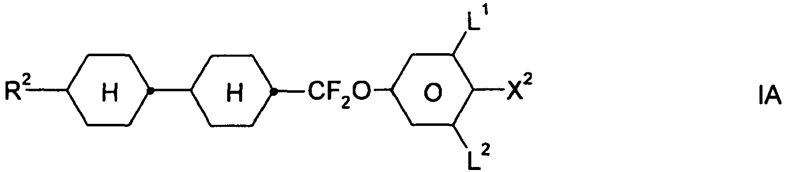 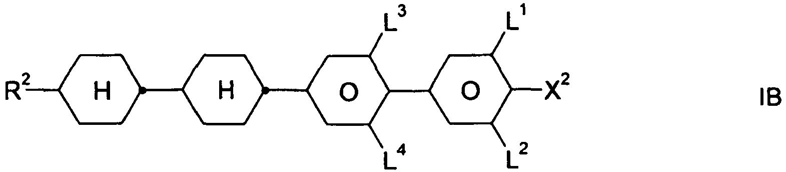 und
zusätzlich eine oder mehrere Verbindungen der RI bis RVII, 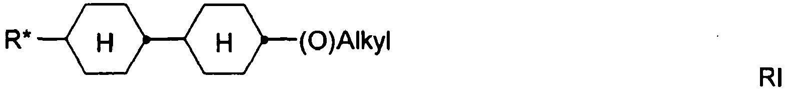 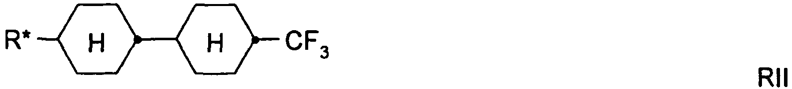 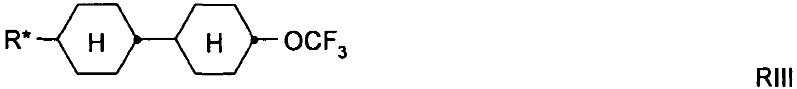 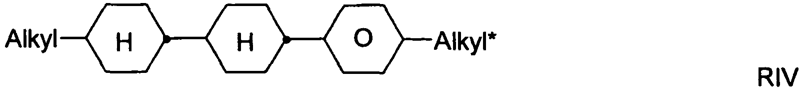 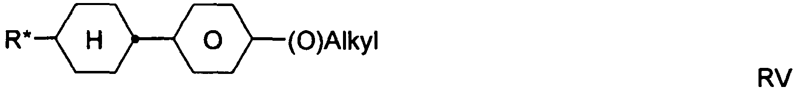 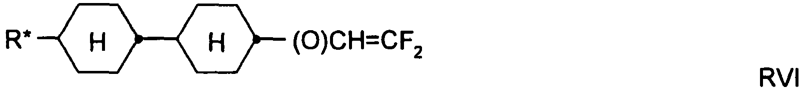 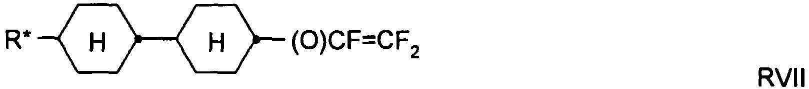 worin
- R*: n-Alkyl, Alkenyl, Alkoxy, Oxaalkyl, Fluoralkyl oder Alkenyloxy mit jeweils bis zu 9 C-Atomen,
- Alkyl oder Alkyl*: jeweils unabhängig voneinander ein geradkettiger oder verzweigter Alkylrest mit 1-9 C-Atomen,
- (O): eine Einfachbindung oder -O-,
- R¹, R²: jeweils unabhängig voneinander H, einen halogenierten, durch CN substituierten oder unsubstituierten Alkylrest mit 1 bis 15 C-Atomen, wobei in diesen Resten auch eine oder mehrere CH₂-Gruppen jeweils unabhängig voneinander durch -C≡C-, -CO-, -CH=CH-, -O-, 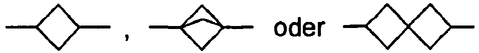 so ersetzt sein könnnen, dass O-Atome nicht direkt miteinander verknüpft sind,
- X¹, X²: jeweils unabhängig voneinander F, Cl, CN, SF₅, SCN, NCS, halogenierter Alkylrest, halogenierter Alkenylrest, halogenierter Alkoxyrest oder halogenierter Alkenyloxyrest mit jeweils bis zu 6 C-Atomen, und
- L¹⁻⁴: jeweils unabhängig voneinander H oder F bedeuten.

Aus der Druckschrift WO 2005/081215 ist eine flüssigkristalline Zusammensetzung bekannt, die je eine Verbindung der Formeln I, IA und IB enthält, sowie weitere Verbindungen. Die Druckschriften US 2007/0001149 A1, US 2006/0278850 A1 und EP 1813662 A1 offenbaren weitere flüssigkristalline Medien, die unter anderem Verbindungen der Formel RI offenbaren.

Die Verbindungen der Formeln I, IA und IB besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formeln I und IA/IB flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren. Das erfindungsgemäße Mischungskonzept führt zu Mischungen, die sich gegenüber dem Stand der Technik durch ihre sehr gute Langzeitstabilität und ihr Vₜₕ/γ₁-Verhältnis auszeichnen. Die erfindungsgemäßen Mischungen sind insbesondere geeignet für Note-PC, PDA und andere mobile Anwendungen.

Die Verbindungen der Formeln I, IA und IB sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

Falls R^{1/2} in den Formeln I/IA/IB einen Alkylrest und/oder einen Alkoxyrest bedeutet, so kann dieser geradkettig oder verzweigt sein. Vorzugsweise ist er geradkettig, hat 1, 2, 3, 4, 5, 6 oder 7 C-Atome und bedeutet demnach bevorzugt Methyl, Ethyl, Propyl, Butyl, Pentyl, Hexyl, Heptyl, Methoxy, Ethoxy, Propoxy, Butoxy, Pentoxy, Hexoxy oder Heptoxy, ferner Octyl, Nonyl, Decyl, Undecyl, Dodecyl, Tridecyl, Tetradecyl, Pentadecyl, Octoxy, Nonoxy, Decoxy, Undecoxy, Dodecoxy, Tridecoxy oder Tetradedoxy.

Falls R^{1/2} einen Alkylrest bedeutet, in dem eine CH₂-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R^{1/2} einen Alkylrest bedeutet, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyl-oxybutyl, Methoxycarbonyl, Ethoxycarbonyl, Propoxy-carbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)-ethyl, 3-(Methoxycarbonyl)-propyl, 3-(Ethoxycarbonyl)-propyl oder 4-(Methoxycarbonyl)-butyl.

Falls R^{1/2} einen Alkylrest bedeutet, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyl-oxyethyl, 3-Acryloyloxypropyl, 4-Acryoyloxybutyl, 5-Acryloyloxypentyl, 6-Acryloyloxyhexyl, 7-Acryloyloxyheptyl, 8-Acryloyloxyoctyl, 9-Acryloyl-oxynonyl, 10-Acryloyloxydecyl, Methacryloyloxymethyl, 2-Methacryloyl-oxyethyl, 3-Methacryloyloxypropyl, 4-Methacryloyloxybutyl, 5-Methacryl-oyloxypentyl, 6-Methacryloyloxyhexyl, 7-Methacryloyloxyheptyl, 8-Methacryloyloxyoctyl, 9-Methacryloyloxynonyl.

Falls R^{1/2} einen einfach durch CN substituierten Alkyl- oder Alkenylrest bedeutet, so ist dieser Rest vorzugsweise geradkettig. Die Substitution durch CN ist in beliebiger Position.

Falls R^{1/2} einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen mit verzweigten Flügelgruppen R^{1/2} können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R^{1/2} sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propyl-pentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R^{1/2} einen Alkylrest darstellt, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxy-carbonyl)-methyl, 2,2-Bis-(methoxycarbonyl)-ethyl, 3,3-Bis-(methoxy-carbonyl)-propyl, 4,4-Bis-(methoxycarbonyl)-butyl, 5,5-Bis-(methoxy-carbonyl)-pentyl, 6,6-Bis-(methocycarbonyl)-hexyl, 7,7-Bis-(methoxy-carbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

Die Verbindungen der Formeln I, IA und IB werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Die Herstellung der Verbindungen der Formel I erfolgt beispielsweise gemäß der Druckschrift DE 102004021334 A1.

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Gegenüber im Stand der Technik offenbarten Mischungen besitzen die erfindungsgemäßen Mischungen einen höheren Klärpunkt, niedrige γ₁-Werte, niedrigere Werte für Fließviskosität und sehr hohe Werte für die VHR bei 100 °C. Die erfindungsgemäßen Mischungen sind bevorzugt als TN-TFT-Mischungen für Monitore oder (teil-)reflektive Anzeigen geeignet.

Die erfindungsgemäßen Flüssigkristallmischungen ermöglichen es bei Beibehaltung der nematischen Phase bis -30 °C, besonders bevorzugt bis -40 °C, bei einem Klärpunkt oberhalb 70 °C, vorzugsweise oberhalb 75 °C, besonders bevorzugt ≥ 80 °C, gleichzeitig dielektrische Anisotropiewerte Δε ≥ 6, vorzugsweise ≥ 8 und einen hohen Wert für den spezifischen Widerstand zu erreichen, wodurch hervorragende STN- und MFK-Anzeigen erzielt werden können. Insbesondere sind die Mischungen durch kleine Operationsspannungen gekennzeichnet. Die TN-Schwellen liegen unterhalb 1,5 V, vorzugsweise unterhalb 1,3 V, besonders bevorzugt ≤ 1,2 V.

Es versteht sich, dass durch geeignete Wahl der Komponenten der erfindungsgemäßen Mischungen auch höhere Klärpunkte (z.B. oberhalb 110 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Rotationsviskosität γ₁ der erfindungsgemäßen Mischungen bei 20 °C ist vorzugsweise < 140 mPa·s, besonders bevorzugt < 120 mPa·s. Der nematische Phasenbereich ist vorzugsweise mindestens 100°, insbesondere mindestens 110°. Vorzugsweise erstreckt sich dieser Bereich mindestens von -40° bis +75°.

Bei Flüssigkristallanzeigen ist eine kleine Schaltzeit erwünscht. Dies gilt besonders für Anzeigen die zur Wiedergabe von Video fähig sein sollen. Für derartige Anzeigen werden Schaltzeiten (Summe: tₒₙ + t_{off}) von maximal 16 ms benötigt. Die Obergrenze der Schaltzeit wird durch die Bildwiederholfrequenz bestimmt.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I und IA/IB eine deutlich kleinere Abnahme des HR mit steigender Temperatur aufweisen als analoge Mischungen enthaltend anstelle den Verbindungen der Formel IA

Cyanophenylcyclohexane der Formel 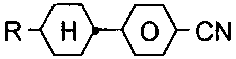 oder Ester der Formel

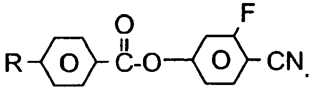

Die erfindungsgemäßen Mischungen enthalten vorzugsweise wenig (≤ 20 %, insbesondere ≤ 10 %) oder keine Nitrile. Die Holding Ratio der erfindungsgemäßen Mischungen beträgt bei 20 °C mindestens 98 %, vorzugsweise > 99 %. Auch die UV-Stabilität der erfindungsgemäßen Mischungen ist erheblich besser, d.h. sie zeigen eine deutlich kleinere Abnahme des HR unter UV-Belastung.

R¹ bedeutet in den Verbindungen der Formeln I vorzugsweise geradkettiges Alkyl mit 1 bis 7 C-Atomen, insbesondere CH₃, C₂H₅, n-C₃H₇, n-C₄H₉, n-C₅H₁₁, n-C₆H₁₃, n-C₇H₁₅, ferner 1E- oder 3-Alkenyl, insbesondere CH₂=CH, CH₃CH=CH, CH₂=CHCH₂CH₂, CH₃CH=CH-CH₂CH₂.

Formel I umfasst vorzugsweise Verbindungen der Formeln I-1 bis I-5: 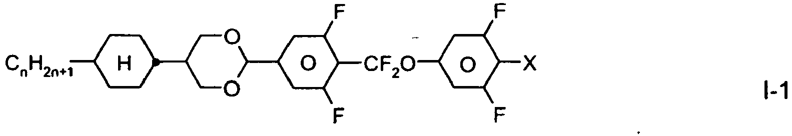 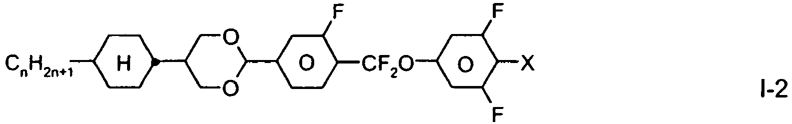 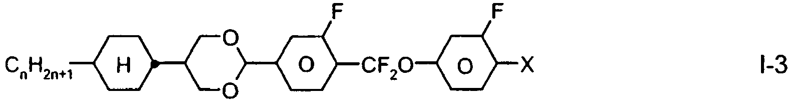 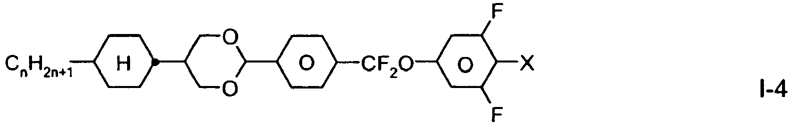 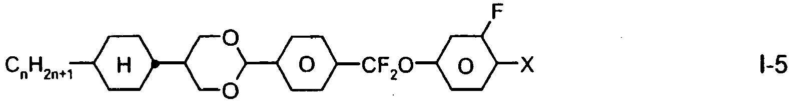 worin n 1, 2, 3, 4, 5, 6 oder 7 bedeutet.

Besonders bevorzugte Verbindungen der Formel I sind Verbindungen der Formeln I bzw. I-1 bis I-5
worin
X F oder OCF₃
bedeutet.

Bevorzugt sind erfindungsgemäße Medien, die wenigstens eine Verbindung der Formel I-1 und/oder I-2 enthalten.

Bevorzugte Verbindungen der Formel IA sind Verbindungen der Formeln IA-1 bis IA-4: 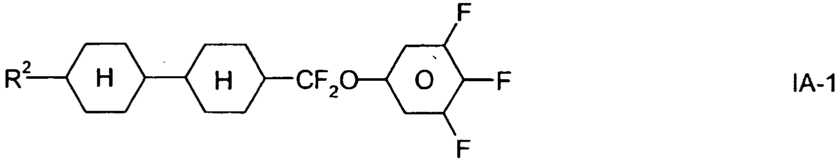 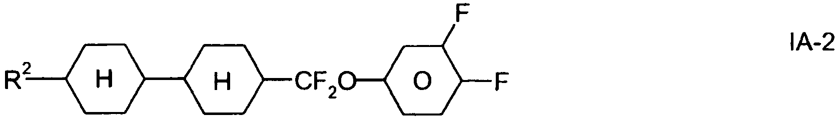 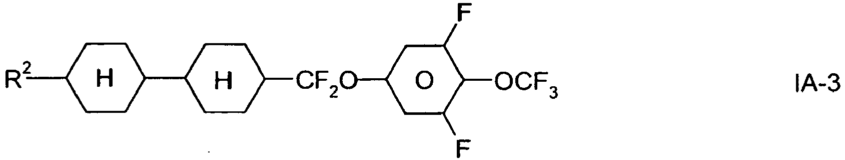 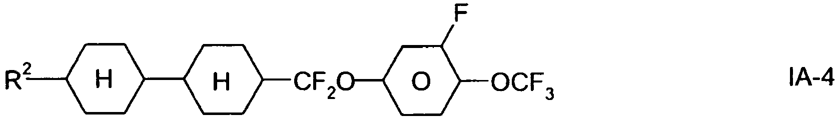 worin R² die oben angegebenen Bedeutungen hat.

Von diesen bevorzugten Verbindungen sind besonders bevorzugt solche der Formeln IA-1 und IA-2.

Bevorzugte Verbindungen der Formel IB sind Verbindungen der Formeln IB-1 bis IB-4: 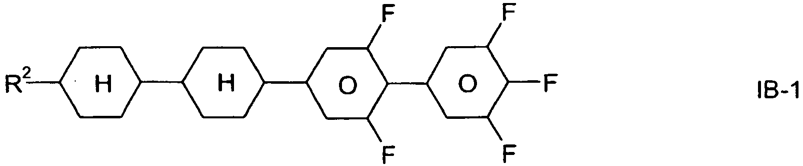 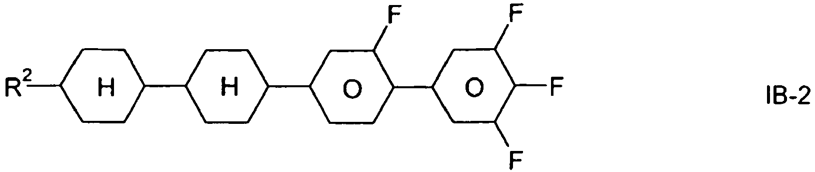 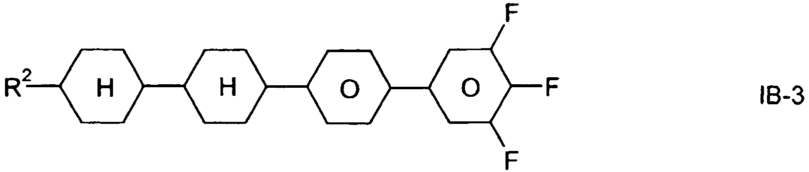 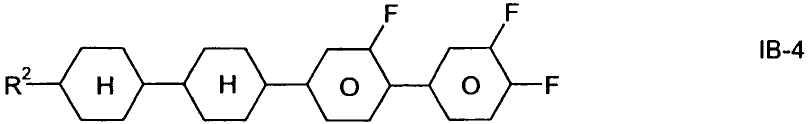 worin R² die oben angegebenen Bedeutungen hat.

Die 1,4-substituierten Cyclohexanringe in den Verbindungen der Formeln I, IA und IB und den zugehörigen Unterformeln sind bevorzugt 1,4-transkonfiguriert.

Bevorzugte Ausführungsformen sind im Folgenden angegeben:
- Das Medium enthält ein, zwei oder mehr Verbindungen ausgewählt aus der Gruppe der Formeln IA-1 bis IA-4;
- Das Medium enthält ein, zwei oder mehr Verbindungen ausgewählt aus der Gruppe der Formeln IB-1 bis IB-4;
- Das Medium enthält zusätzlich eine oder mehrere Verbindungen ausgewählt aus der Gruppe bestehend aus den allgemeinen Formeln II bis VI: 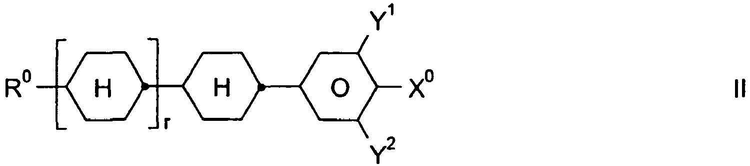 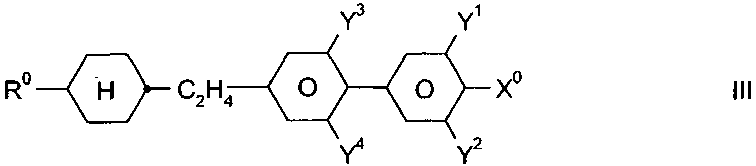 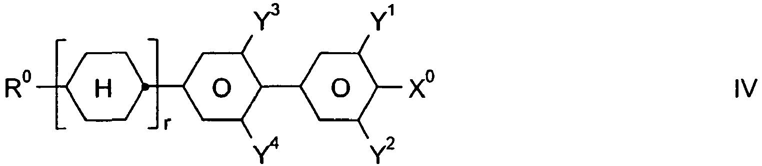 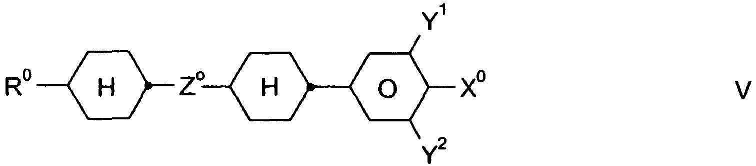 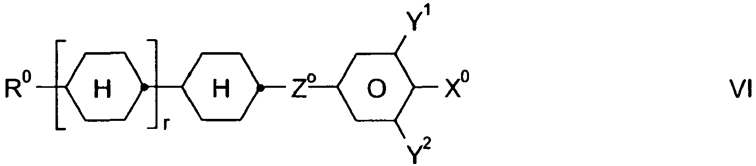
worin die einzelnen Reste die folgenden Bedeutungen haben:
- R⁰: H, n-Alkyl, Alkoxy, Oxaalkyl, Fluoralkyl, Alkenyloxy oder Alkenyl mit jeweils bis zu 9 C-Atomen,
- X⁰: F, Cl, halogeniertes Alkyl, Alkenyl, Alkenyloxy oder Alkoxy mit bis zu 6.C-Atomen,
- Z⁰: -C₂F₄-, -CF=CF-, -CH=CF-, -CF=CH-, -CH=CH-, -O(CH₂)₃-, -(CH₂)₃O-, -C₂H₄-, -(CH₂)₄-, -CF₂O-, -OCF₂-, -OCH₂- oder -CH₂O-,
- Y¹⁻⁴: jeweils unabhängig voneinander H oder F,
- r: 0 oder 1.

Die Verbindung der Formel IV ist vorzugsweise 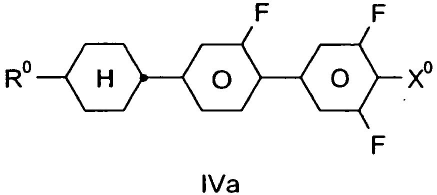 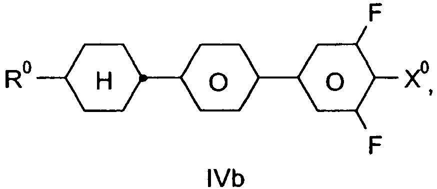 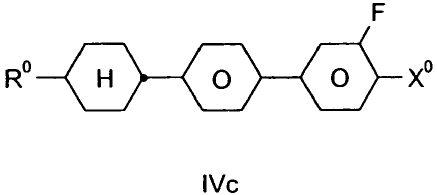 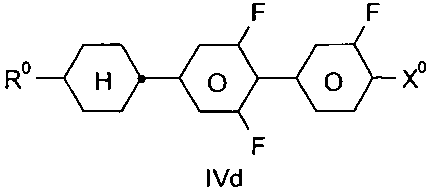 oder 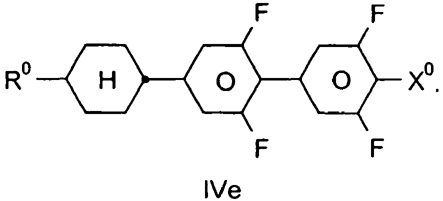
- Das Medium enthält zusätzlich eine oder mehrere Verbindungen ausgewählt aus der Gruppe bestehend aus den allgemeinen Formeln VII bis XI: 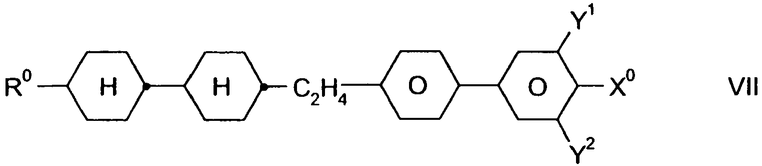 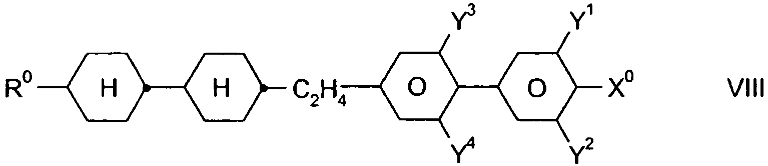 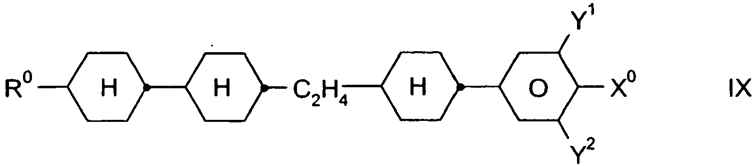 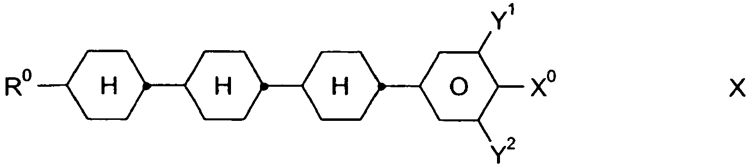 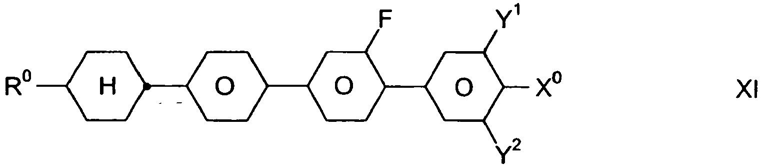 worin R⁰, X⁰, Y¹ und Y² jeweils unabhängig voneinander eine der für Formel II oben angegebenen Bedeutungen haben, Y³ und Y⁴ bedeuten jeweils unabhängig voneinander H oder F. X⁰ ist vorzugsweise F, Cl, CF₃, OCF₃ oder OCHF₂. R⁰ bedeutet vorzugsweise Alkyl, Oxaalkyl, Fluoralkyl oder Alkenyl mit jeweils bis zu 6 C-Atomen.
- Das Medium enthält eine oder mehrere Ester-Verbindungen der Formeln Ea bis Ef: 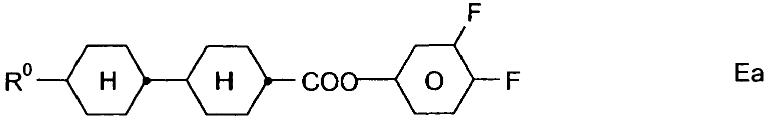 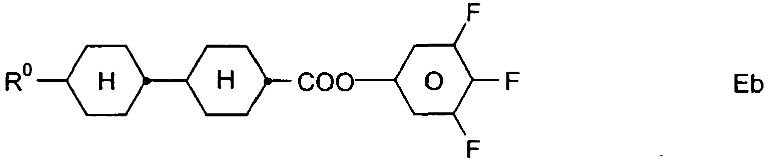 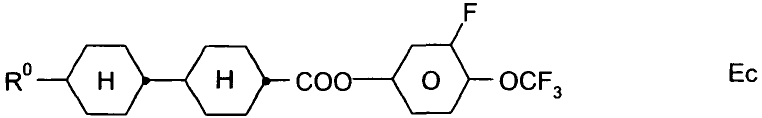 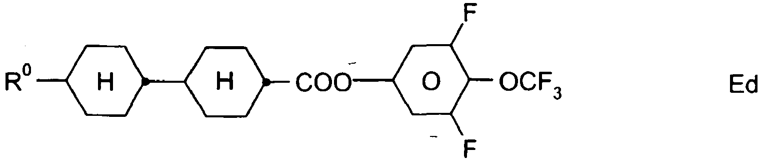 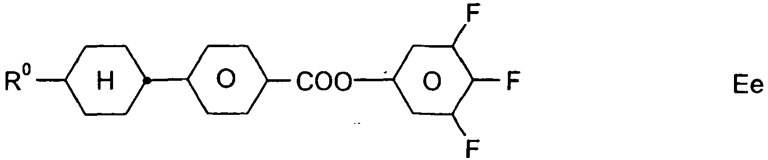 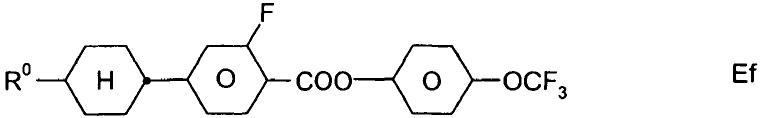 worin R⁰ die für Formel II oben angegebene Bedeutung hat;
- Der Anteil an Verbindungen der Formeln IA/IB und I bis VI zusammen beträgt im Gesamtgemisch mindestens 50 Gew.%;
- Der Anteil an Verbindungen der Formel I beträgt im Gesamtgemisch
   ≥ 5 Gew.%, vorzugsweise ≥ 10 Gew.%, insbesondere ≥ 12 Gew.%.
- Der Anteil an Verbindungen der Formel I beträgt im Gesamtgemisch 5 bis 40, bevorzugt 8 bis 30 Gew.% und besonders bevorzugt 10 bis 30 Gew.%;
- Der Anteil an Verbindungen der Formel IA beträgt im Gesamtgemisch 10 bis 50, besonders bevorzugt 15 bis 40 Gew.%;
- Der Anteil an Verbindungen der Formel IB beträgt im Gesamtgemisch 1 bis 20, besonders bevorzugt 2 bis 10 Gew.%;
- Der Anteil an Verbindungen der Formeln II bis VI im Gesamtgemisch beträgt 30 bis 80 Gew.%;
- 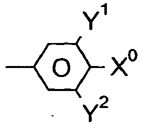 ist vorzugsweise 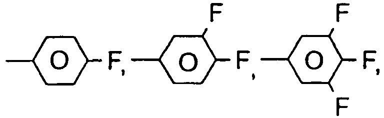 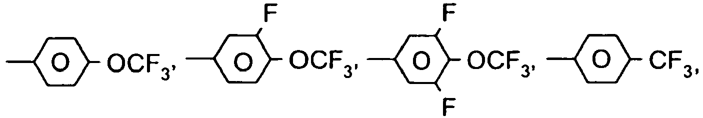 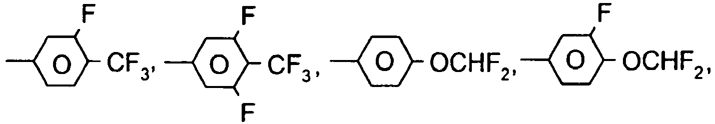 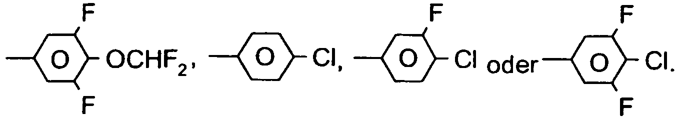
- Das Medium enthält Verbindungen der Formeln II, III, IV, V oder VI;
- R⁰ ist geradkettiges Alkyl oder Alkenyl mit 1 bzw. 2 bis 7 C-Atomen;
- Das Medium besteht im wesentlichen aus Verbindungen der Formeln IA/IB und I bis VI;
- Das Medium enthält zusätzlich ein, zwei, drei oder mehr, vorzugsweise zwei oder drei, Verbindungen der Formel 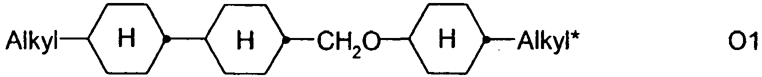 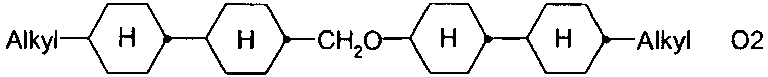 worin "Alkyl" und "Alkyl*" jeweils unabhängig voneinander ein geradkettiger oder verzweigter Alkylrest mit 1-9 C-Atomen bedeutet.
   Der Anteil der Verbindungen der Formeln O1 und/oder O2 in den erfindungsgemäßen Mischungen beträgt vorzugsweise 5-10 Gew.%.
- Das Medium enthält vorzugsweise 5-35 Gew.% der Verbindung IVa.
- Das Medium enthält vorzugsweise eine, zwei oder drei Verbindungen der Formel IVa, worin X⁰ F oder OCF₃ bedeutet.
- Das Medium enthält vorzugsweise ein oder mehrere Verbindungen der Formeln IIa bis IIg, 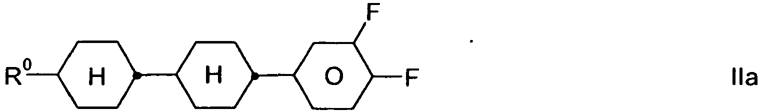 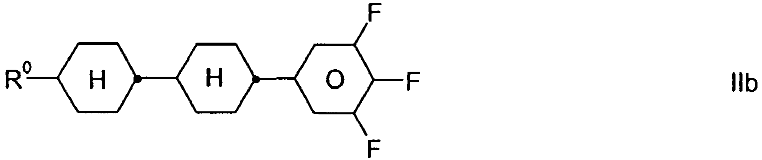 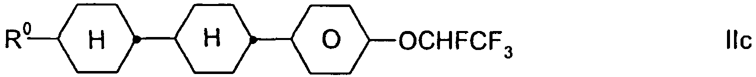 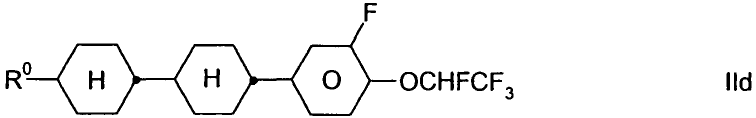 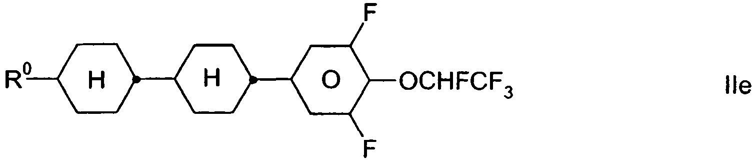 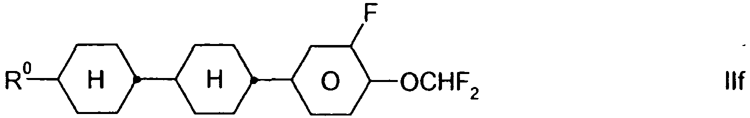 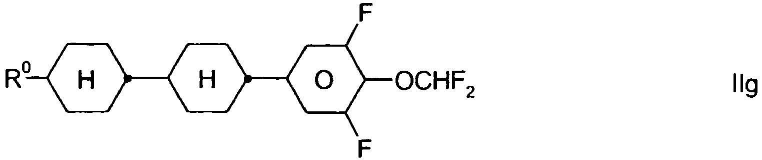 worin R⁰ die oben angegebenen Bedeutungen hat. In den Verbindungen der Formeln IIa-IIg bedeutet. R⁰ vorzugsweise H, Methyl, Ethyl, n-Propyl, n-Butyl oder n-Pentyl, ferner n-Hexyl oder n-Heptyl.
- Das Gewichtsverhältnis (I + IA/IB) : (II + III + IV + V + VI) ist vorzugsweise 1 : 10 bis 10 : 1.
- Das Medium besteht im wesentlichen aus Verbindungen ausgewählt aus der Gruppe bestehend aus den allgemeinen Formeln IA/IB und I bis XI.
- Der Anteil der Verbindungen der Formel IVb und/oder IVc, worin X⁰ Fluor und R⁰ C₂H₅, n-C₃H₇, n-C₄H₅ oder n-G₅H₁₁ bedeutet, beträgt im Gesamtgemisch 2 bis 20 Gew.%, insbesondere 2 bis 15 Gew.%;
- Das Medium enthält vorzugsweise ein, zwei oder drei, ferner vier, Homologe der Verbindungen ausgewählt aus der Gruppe H1 bis H15 (n = 1-12): 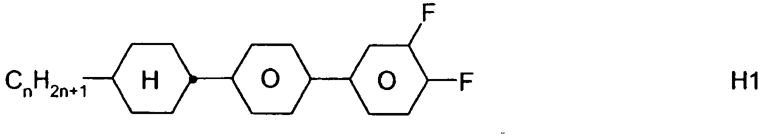 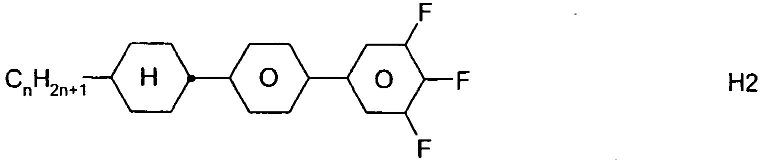 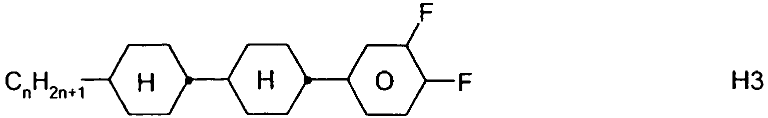 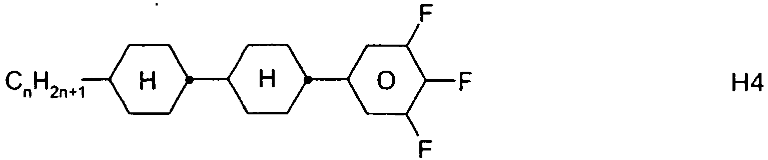 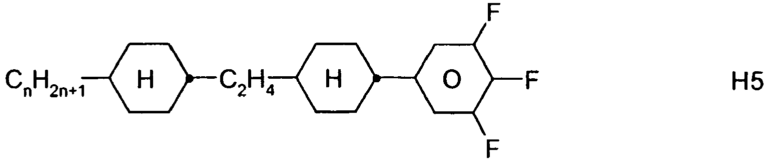 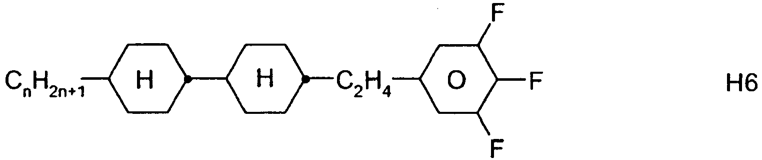 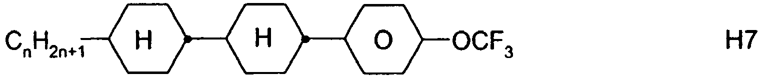 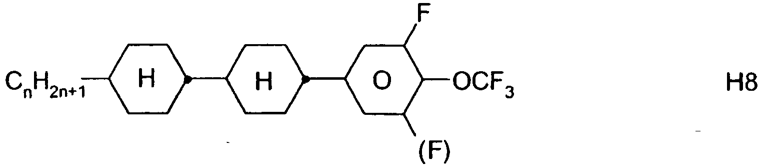 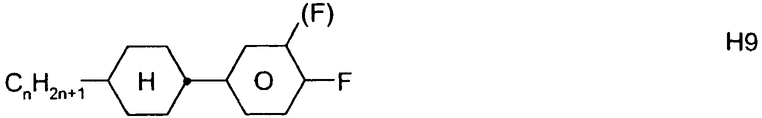 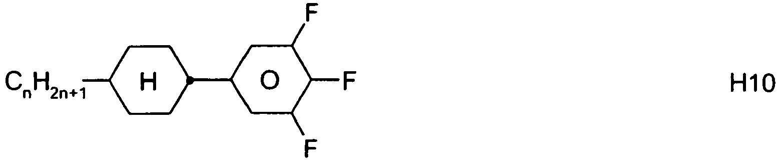 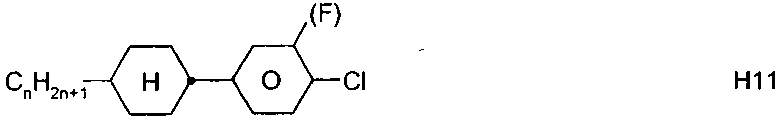 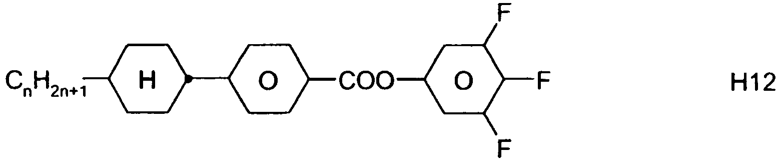 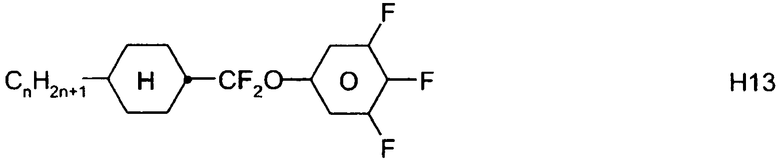 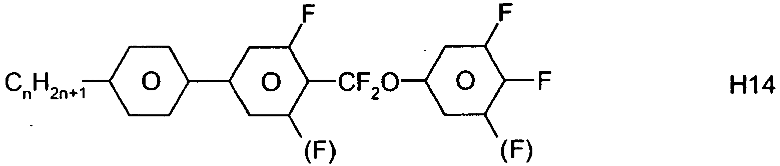 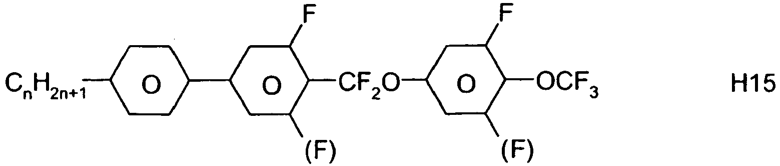
- Das Medium enthält vorzugsweise die Verbindung IIb, worin R⁰ Methyl bedeutet;
- Das Medium enthält low An-Verbindungen ausgewählt aus der Gruppe bestehend aus den Formeln RI bis RVII wie oben definiert.
- Das Medium enthält zusätzlich ein, zwei oder mehr Verbindungen mit annellierten Ringen der Formeln AN1 bis AN 11: 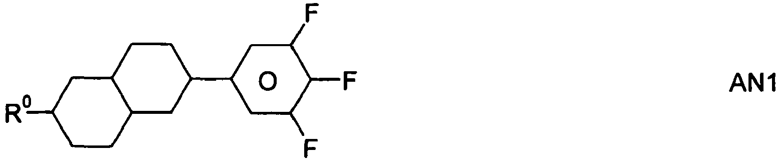 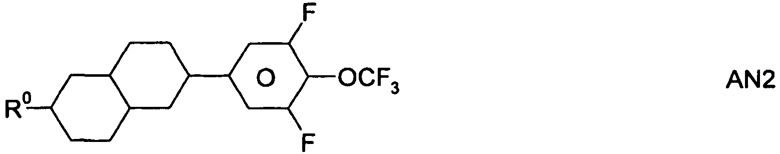 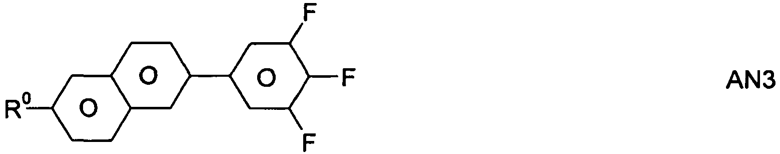 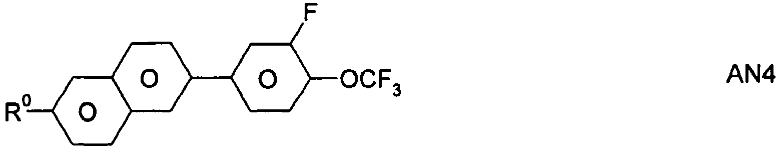 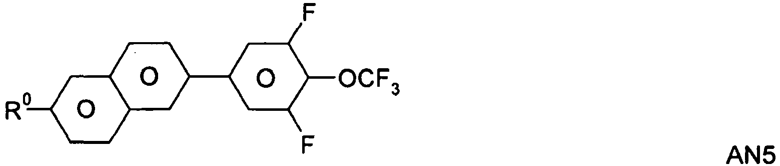 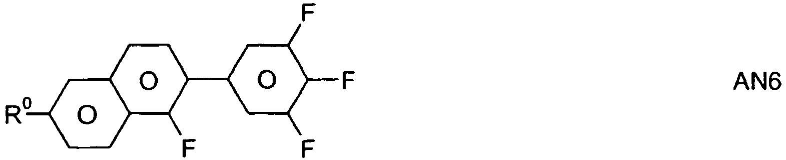 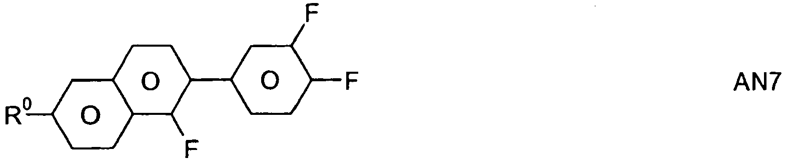 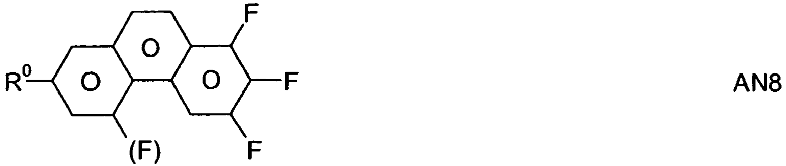 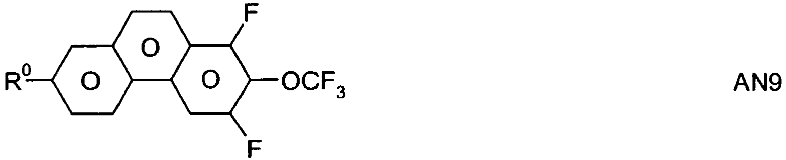 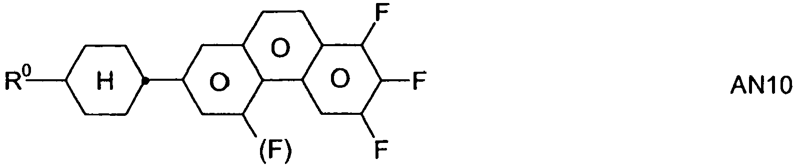 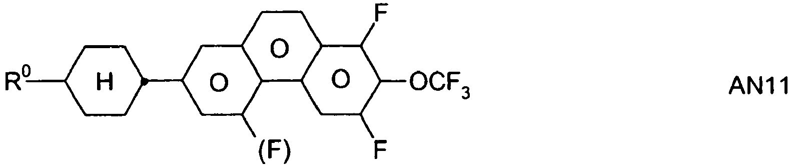 worin R⁰ die oben angegebenen Bedeutungen hat;
- Das Medium enthält zusätzlich eine oder mehrere Pyranverbindungen der Formeln P-1 bis P-11, 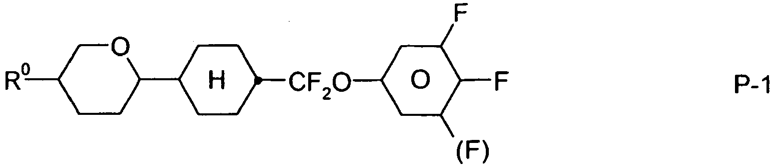 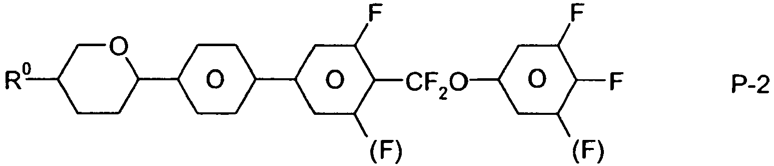 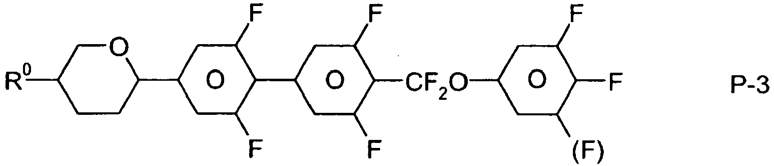 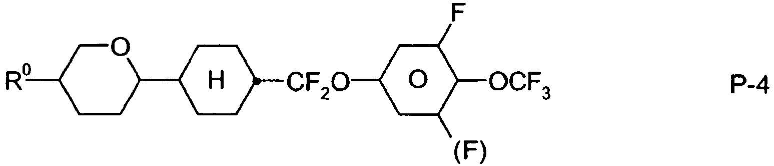 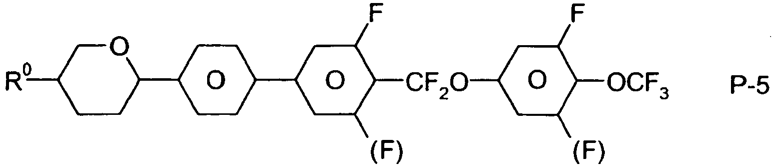 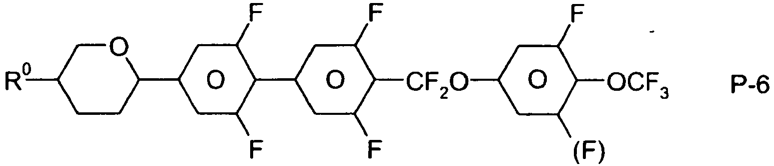 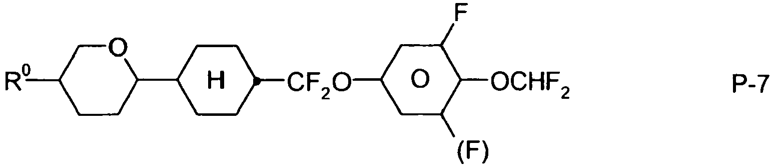 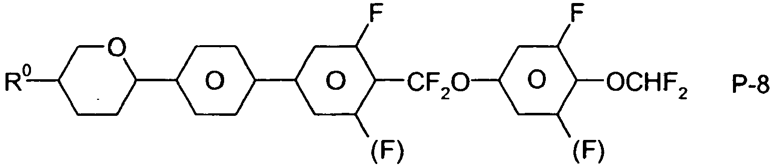 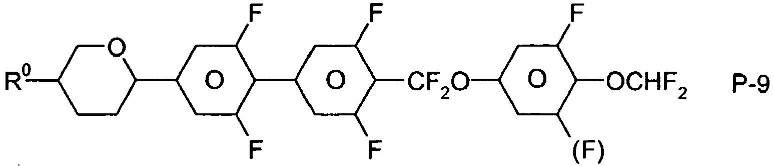 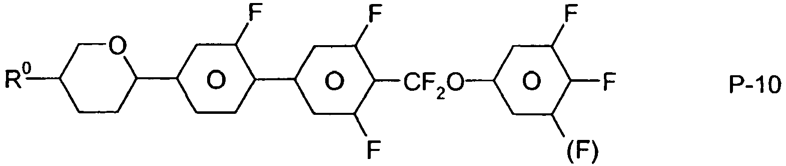 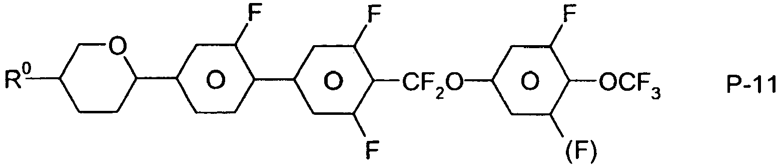 worin R⁰ die oben angegebenen Bedeutungen besitzt.
- Das Medium enthält ein oder mehrere Verbindungen ausgewählt aus den Formeln P-1, H15 und P-5: 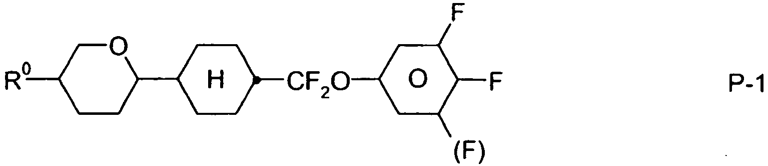 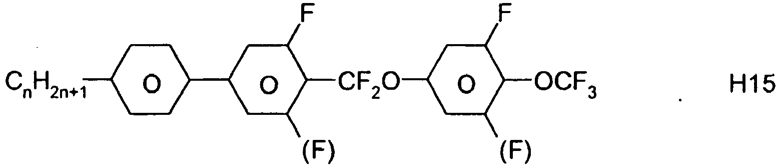 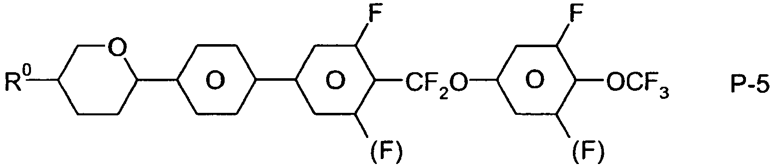 Der Anteil an diesen Verbindungen beträgt insgesamt besonders bevorzugt 5 bis 50 Gew.%.
- Das Medium enthält vorzugseise ein oder mehrere Dioxanverbindungen der Formeln D-1 und/oder D-2, 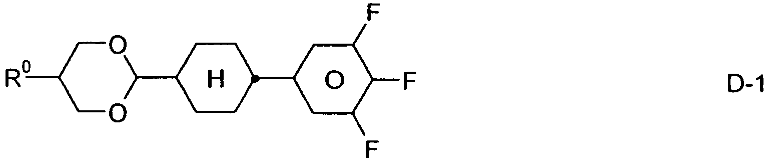 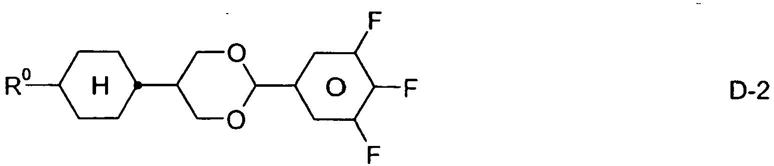 worin
   R⁰ die oben angegebenen Bedeutungen hat.

Bevorzugte Mischungen enthalten 2-40 % an Dioxanen.

Der Ausdruck "Alkyl" bzw. "Alkyl*" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" umfasst geradkettige und verzweigte Alkenylgruppen mit 2-7 Kohlenstoffatomen, insbesondere die geradkettigen Gruppen. Bevorzugte Alkenylgruppen sind C₂-C₇-1 E-Alkenyl, C₄-C₇-3E-Alkenyl, C₅-C₇-4-Alkenyl, C₆-C₇-5-Alkenyl und C₇-6-Alkenyl, insbesondere C₂-C₇-1 E-Alkenyl, C₄-C₇-3E-Alkenyl und C₅-C₇-4-Alkenyl. Beispiele besonders bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfasst vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Es wurde gefunden, dass bereits ein relativ geringer Anteil an Verbindungen der Formeln I und IA/IB im Gemisch mit üblichen Flüssigkristallmaterialien, insbesondere jedoch mit einer oder mehreren Verbindungen der Formeln II, III, IV, V und/oder VI zu einer beträchtlichen Erniedrigung der Schwellenspannung und zu hohen Werten für die VHR (100 °C) führt, wobei gleichzeitig breite nematische Phasen mit tiefen Übergangstemperaturen smektisch-nematisch beobachtet werden, wodurch die Lagerstabilität verbessert wird. Bevorzugt sind insbesondere Mischungen, die neben ein oder mehreren Verbindungen der Formeln I und IA/IB ein oder mehrere Verbindungen der Formel IV enthalten, insbesondere Verbindungen der Formel IVa, worin X⁰ F oder OCF₃ bedeutet. Die Verbindungen der Formeln IA/IB und I bis VI sind farblos, stabil und untereinander und mit anderen Flüssigkristallmaterialien gut mischbar.

Das optimale Mengenverhältnis der Verbindungen der Formeln I, IA, IB und II + III + IV + V + VI hängt weitgehend von den gewünschten Eigenschaften, von der Wahl der Komponenten der Formeln I, IA, IB, II, III, IV, V und/oder VI und der Wahl weiterer gegebenenfalls vorhandener Komponenten ab.

Geeignete Mengenverhältnisse innerhalb des oben angegebenen Bereichs können von Fall zu Fall leicht ermittelt werden, in dem man sich an den Stoffdaten für die Einzelkomponenten orientiert.

Die Gesamtmenge an Verbindungen der Formeln IA/IB und I bis XI in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln IA/IB und I bis XI sind.

In einer besonders bevorzugten Ausführungsform enthalten die erfindungsgemäßen Medien Verbindungen der Formel II bis VI (vorzugsweise II, III und/oder IV, insbesondere IVa), worin X⁰ F, OCF₃, OCHF₂, F, OCH=CF₂, OCF=CF₂ oder OCF₂-CF₂H bedeutet. Eine günstige synergistische Wirkung mit den Verbindungen der Formeln I und IA/IB führt zu besonders vorteilhaften Eigenschaften. Insbesondere Mischungen enthaltend Verbindungen der Formel I, IA, IB und der Formel IVa zeichnen sich durch ihre niedrige Schwellenspannung aus.

Die einzelnen Verbindungen der Formeln IA/IB und I bis XVIII und deren Unterformeln, die in den erfindungsgemäßen Medien verwendet werden können, sind entweder bekannt, oder sie können analog zu den bekannten Verbindungen hergestellt werden.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. Stabilisatoren, UV-Filter, Antioxidantien, enthalten. Beispielsweise können 0-15 % pleochroitische Farbstoffe oder chirale Dotierstoffe zugesetzt werden.

Gegenstand der Erfindung ist daher außerdem ein Verfahren zur Herstellung eines flüssigkristallinen Mediums wie vor und nachstehend beschrieben, das dadurch gekennzeichnet ist, dass man eine oder mehrere der Verbindungen der Formel I und eine oder mehrere Verbindungen ausgewählt aus den Formeln IA und IB mit weiteren flüssigkristallinen Cokomponenten mischt und gegebenenfalls Additive zugibt.

Weitere Kombinationen der Ausführungsformen und Varianten der Erfindung ergeben sich aus den Ansprüchen.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Akronym für den Grundkörper angegeben. Im Einzelfall folgt getrennt von Akronym für den Grundkörper mit einem Strick ein Code für die Substituenten R^{1*}, R^{2*} , L^{1*}, L^{2*} und L^{3*}:

| Code für R^{1*}, R^{2*}, L^{1*}, L^{2*}, L^{3*} | R^{1*} | R^{2*} | L^{1*} | L^{2*} | L^{3*} |
|---|---|---|---|---|---|
| nm | CₙH₂ₙ₊₁ | CₘH₂ₘ₊₁ | H | H | H |
| nOm | CₙH₂ₙ₊₁ | OCₘH₂ₘ₊₁ | H | H | H |
| nO.m | OCₙH₂ₙ₊₁ | CₘH₂ₘ₊₁ | H | H | H |
| n | CₙH₂ₙ₊₁ | CN | H | H | H |
| nN.F | CₙH₂ₙ₊₁ | CN | H | H | F |
| nN.F.F | CₙH₂ₙ₊₁ | CN | H | F | F |
| nF | CₙH₂ₙ₊₁ | F | H | H | H |
| nOF | OCₙH₂ₙ₊₁ | F | H | H | H |
| nF.F | CₙH₂ₙ₊₁ | F | H | H | F |
| nmF | CₙH₂ₙ₊₁ | CₘH₂ₘ₊₁ | F | H | H |
| nOCF₃ | CₙH₂ₙ₊₁ | OCF₃ | H | H | H |
| nOCF₃.F | CₙH₂ₙ₊₁ | OCF₃ | F | H | H |
| n-Vm | CₙH₂ₙ₊₁ | -CH=CH-CₘH₂ₘ₊₁ | H | H | H |
| nV-Vm | CₙH₂ₙ₊₁-CH=CH- | -CH=CH-CₘH₂ₘ₊₁ | H | H | H |

Bevorzugte Mischungskomponenten finden sich in den Tabellen A und B.

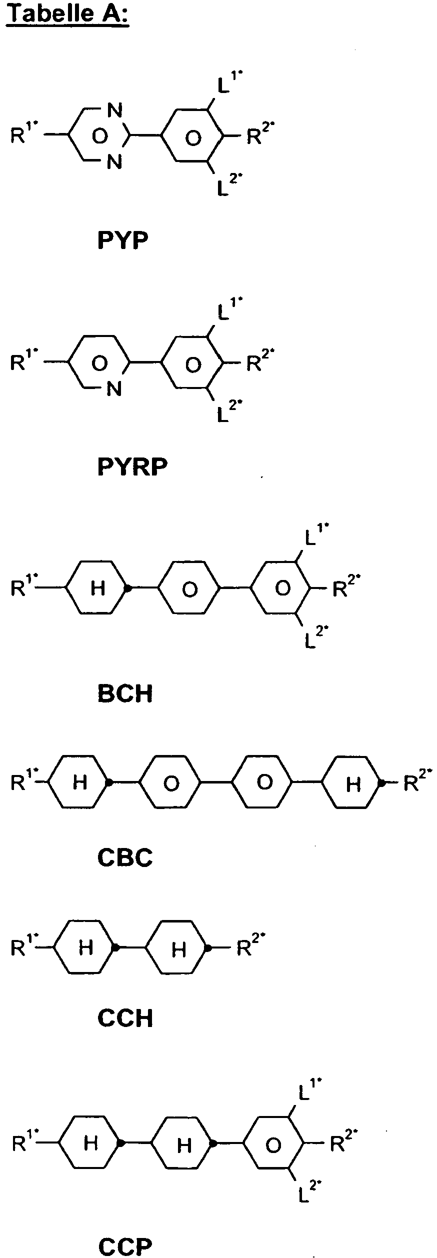

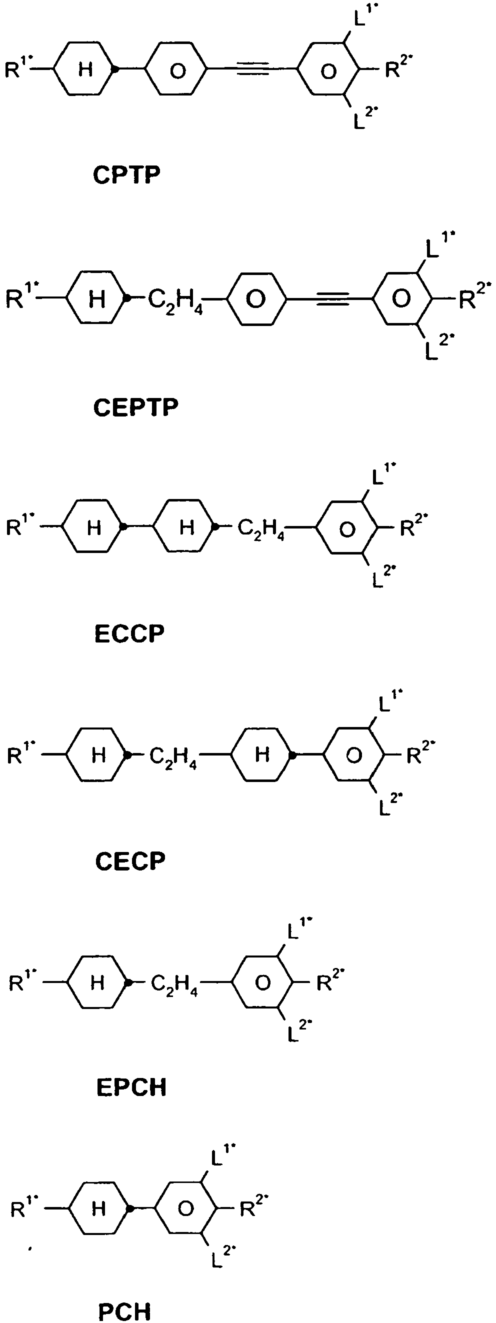

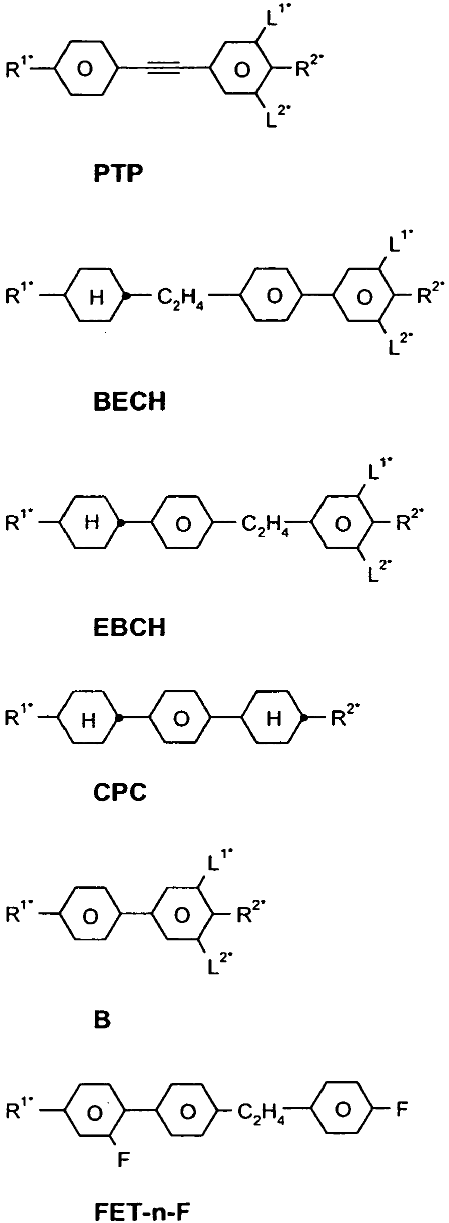

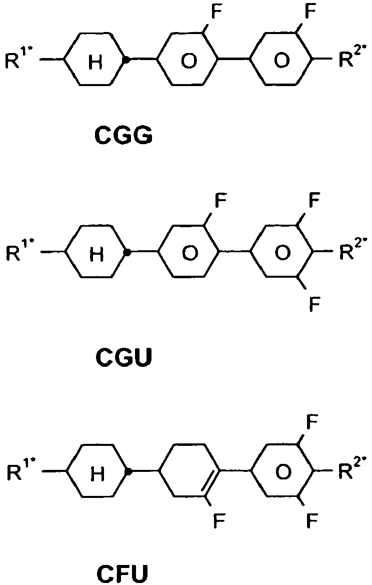

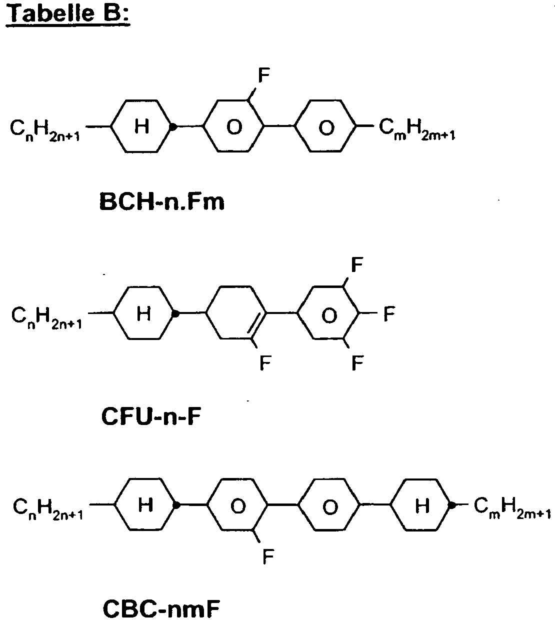

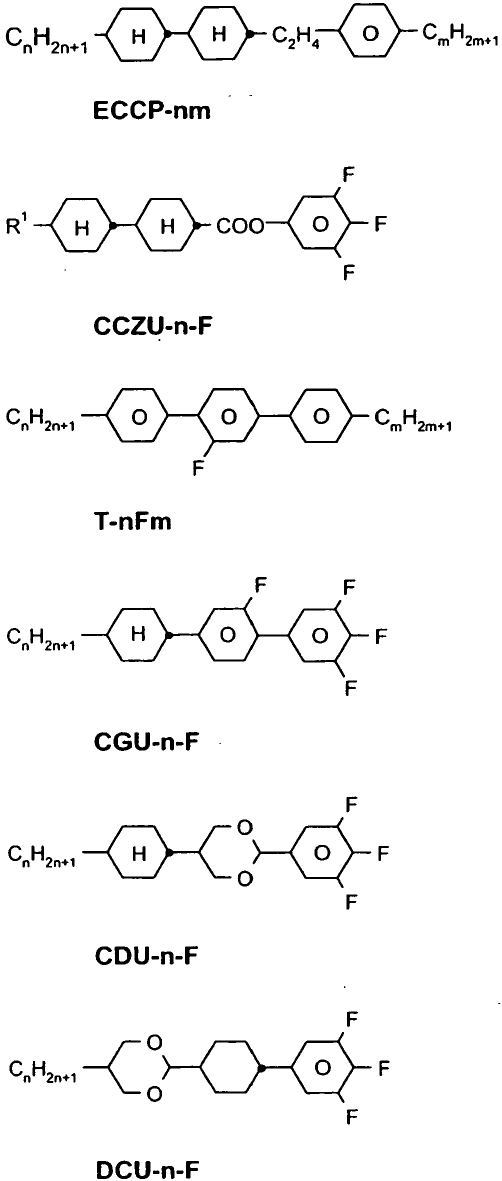

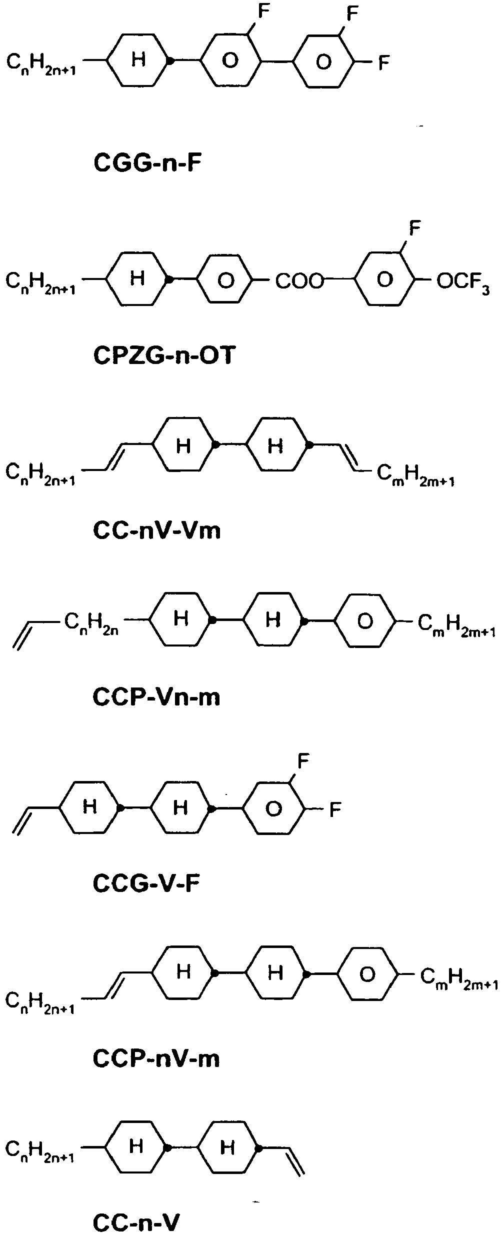

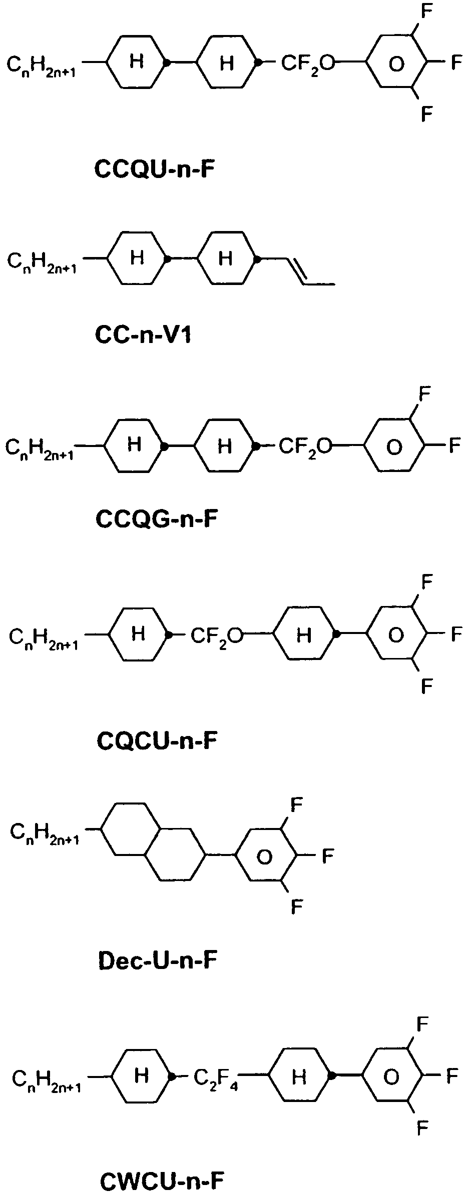

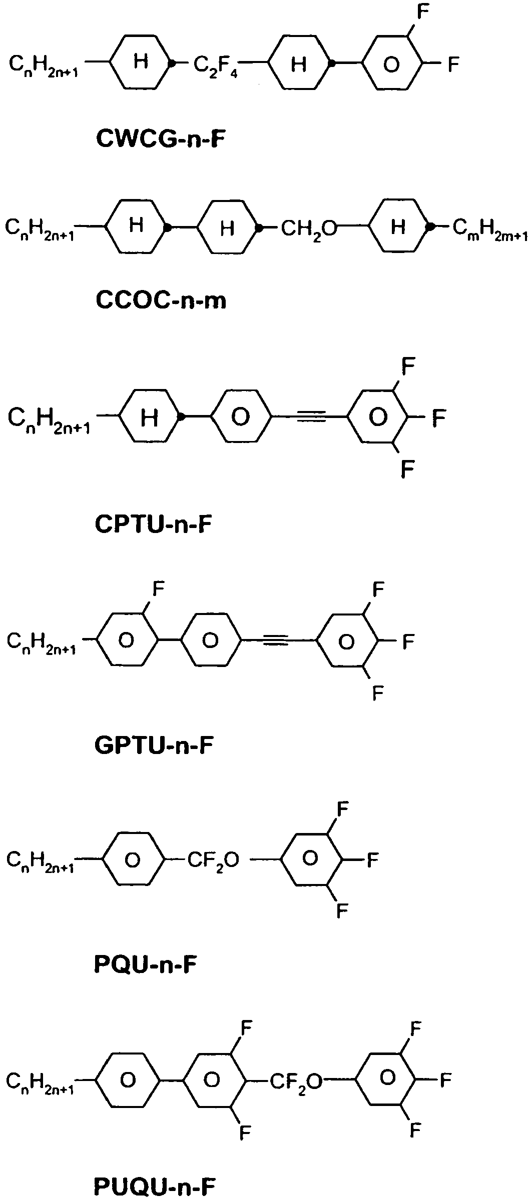

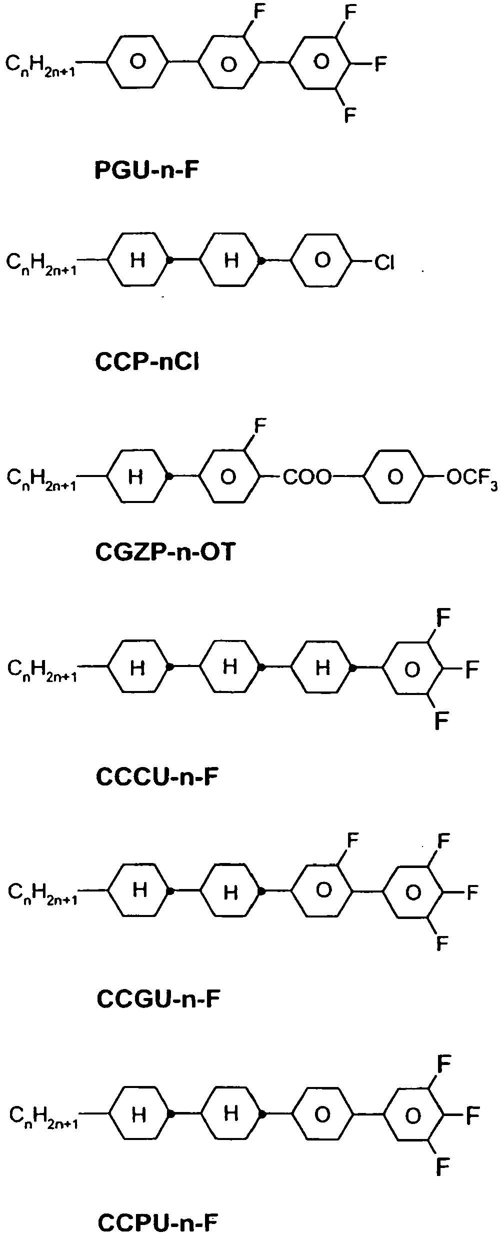

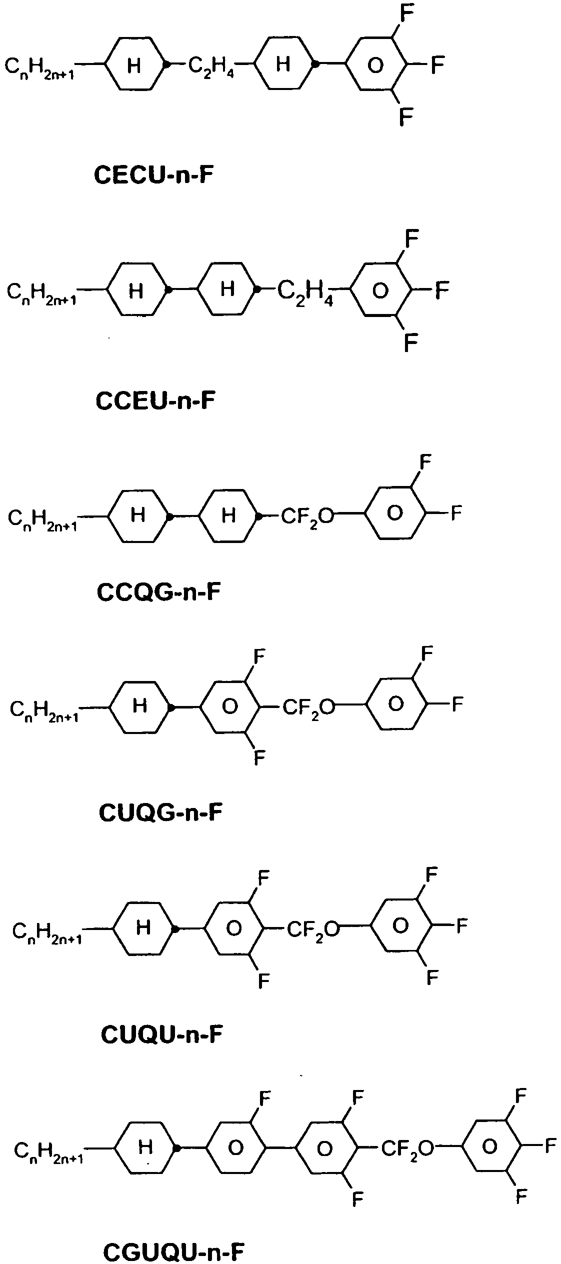

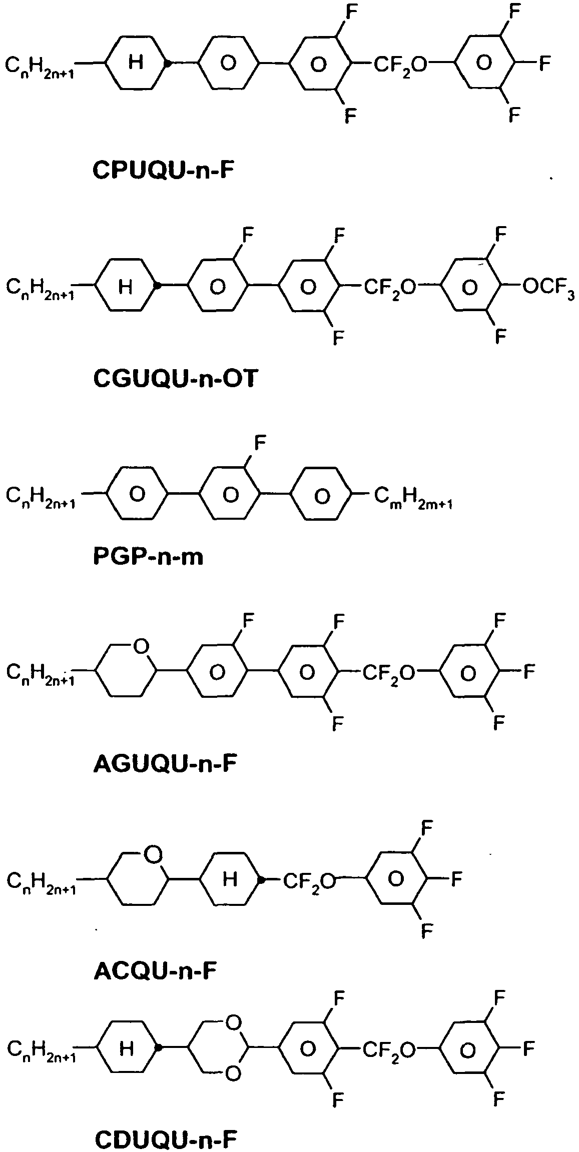

Besonders bevorzugt sind flüsigkristalline Mischungen, die neben den Verbindungen der Formeln I und IA/IB mindestens ein, zwei, drei oder vier Verbindungen aus der Tabelle B enthalten.

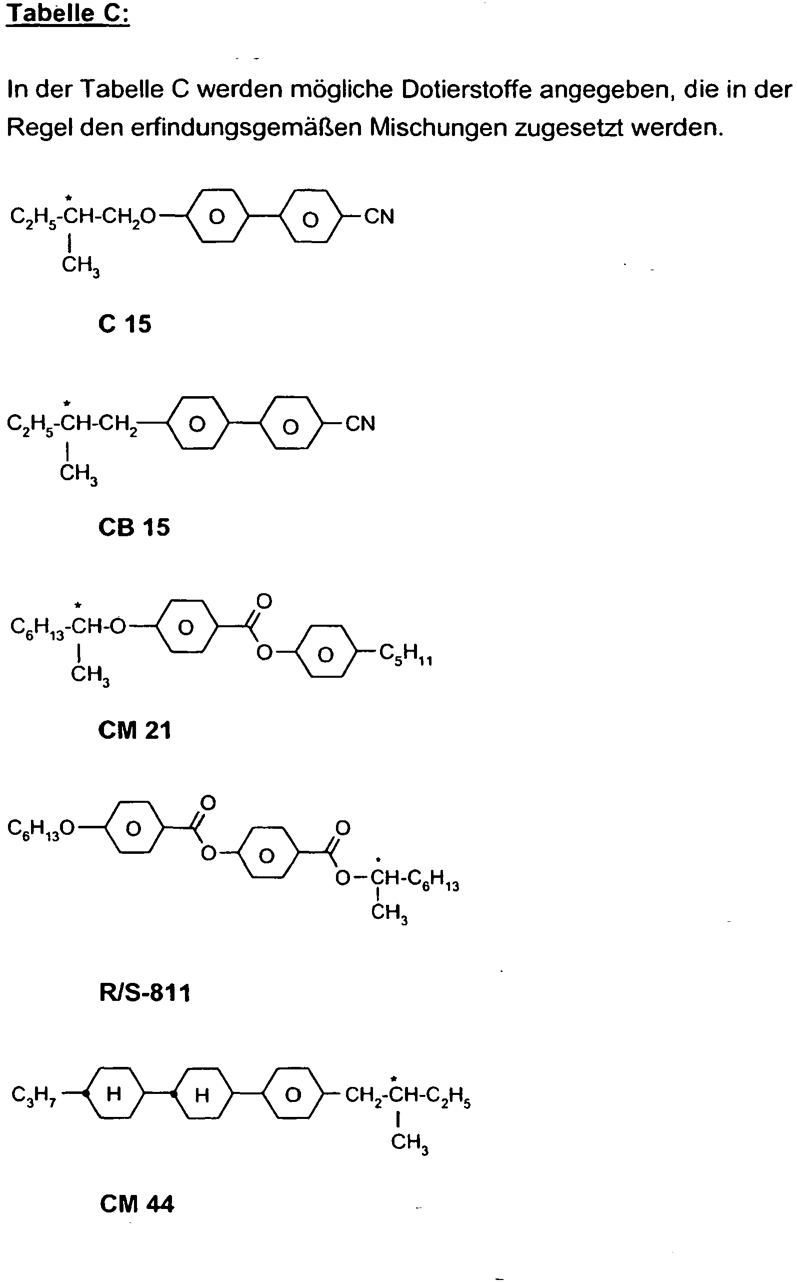

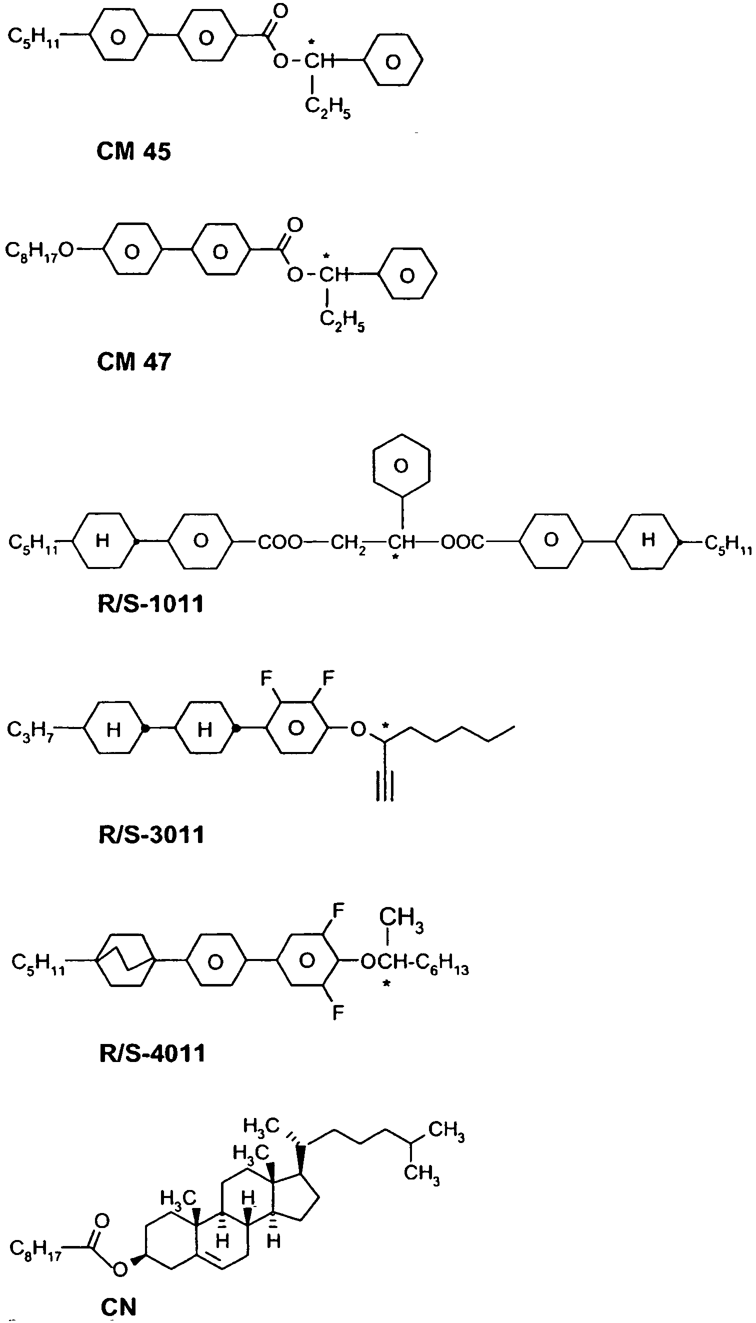

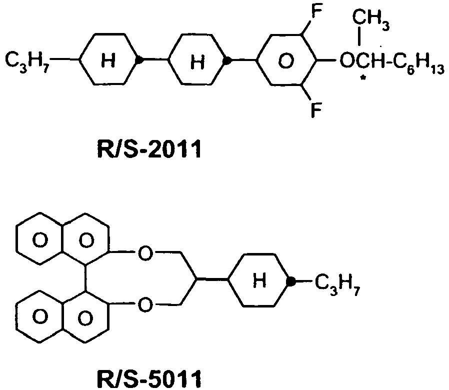

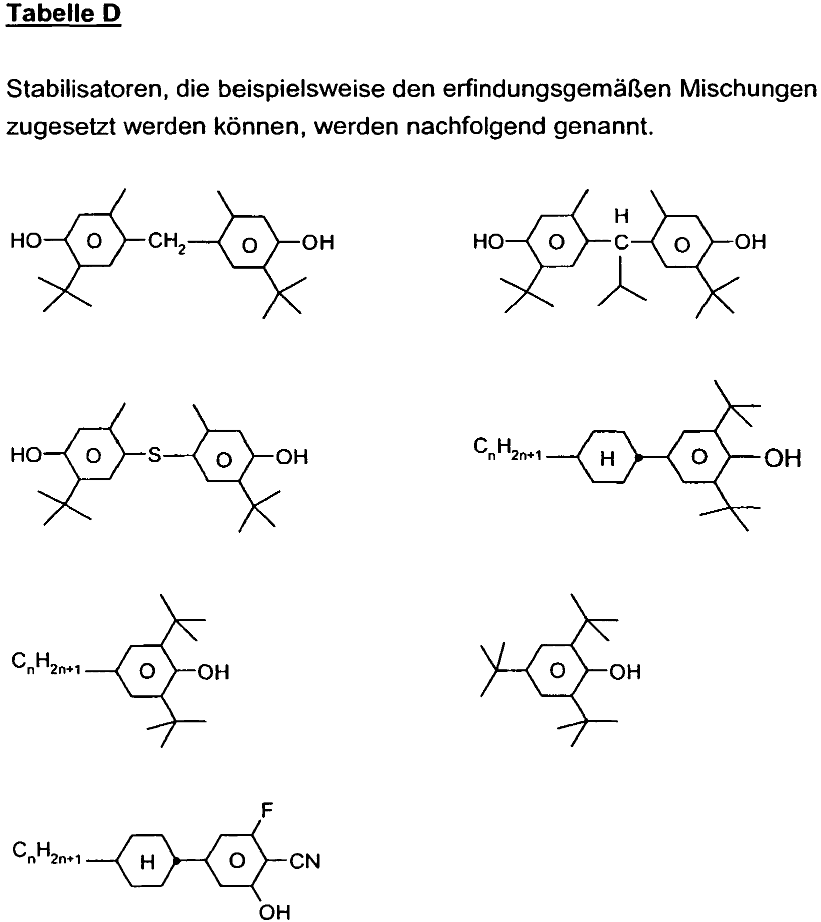

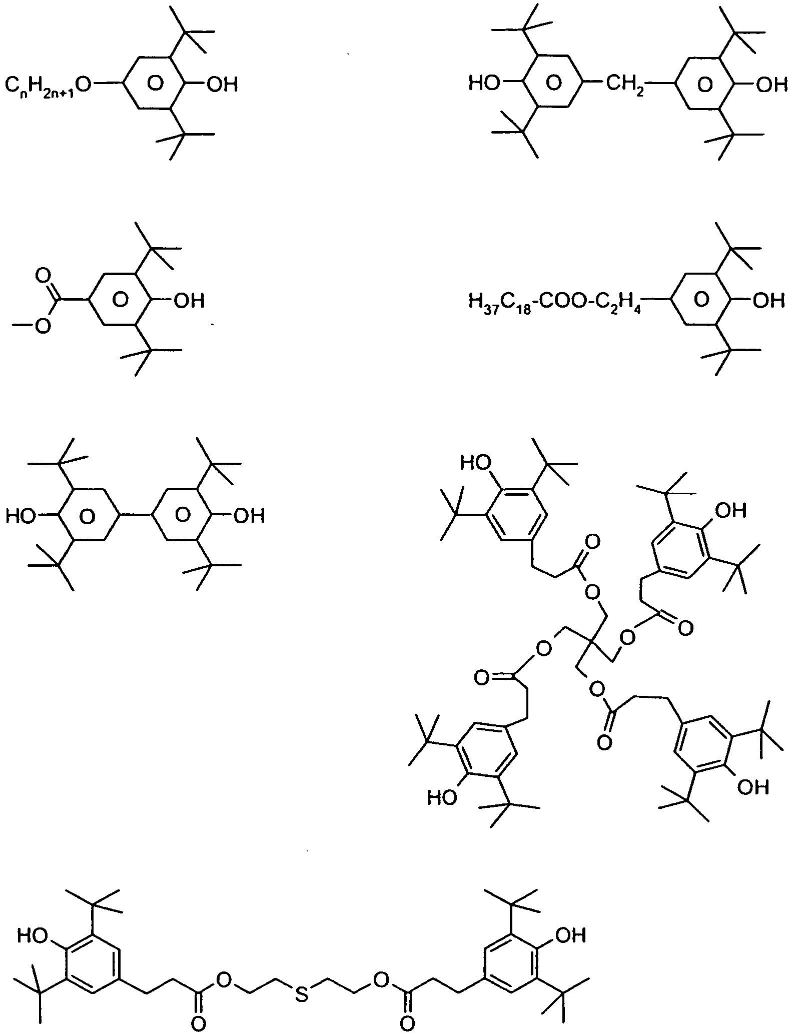

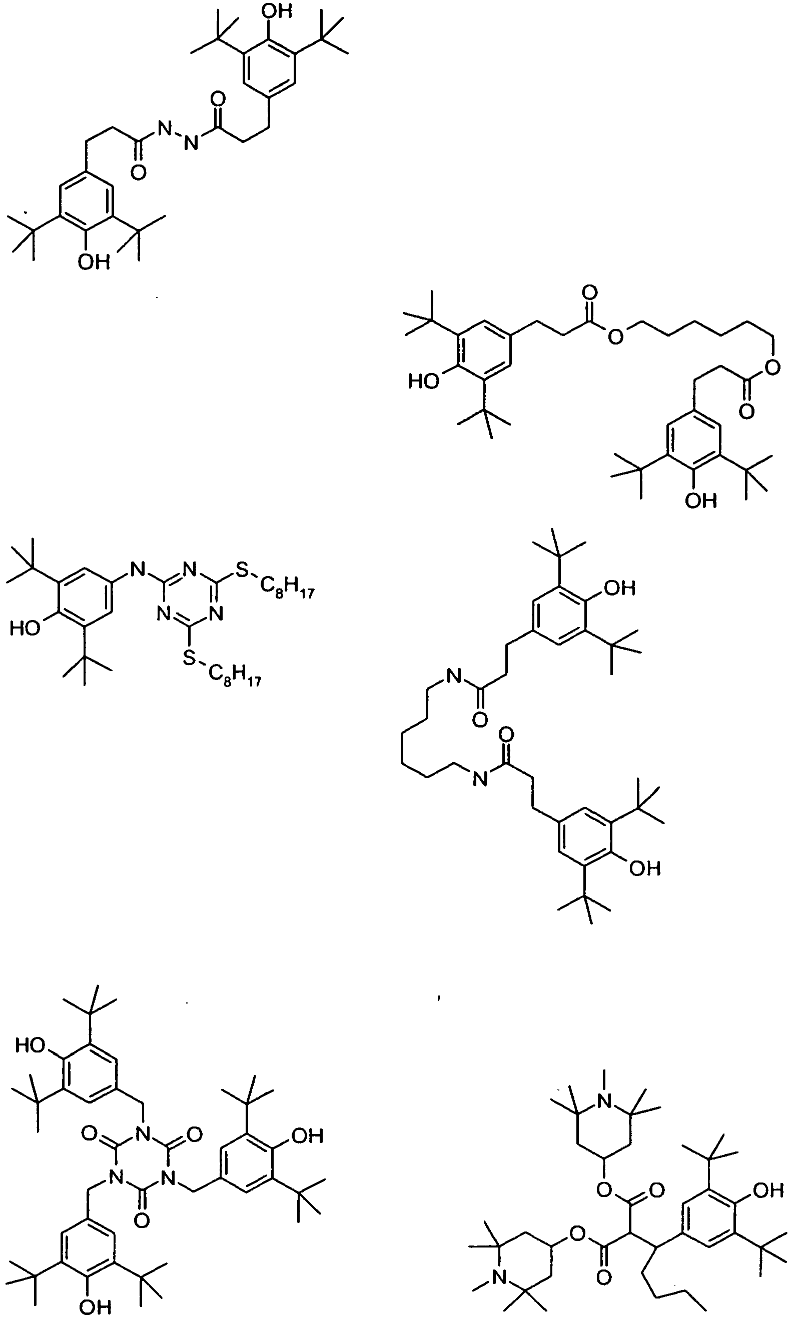

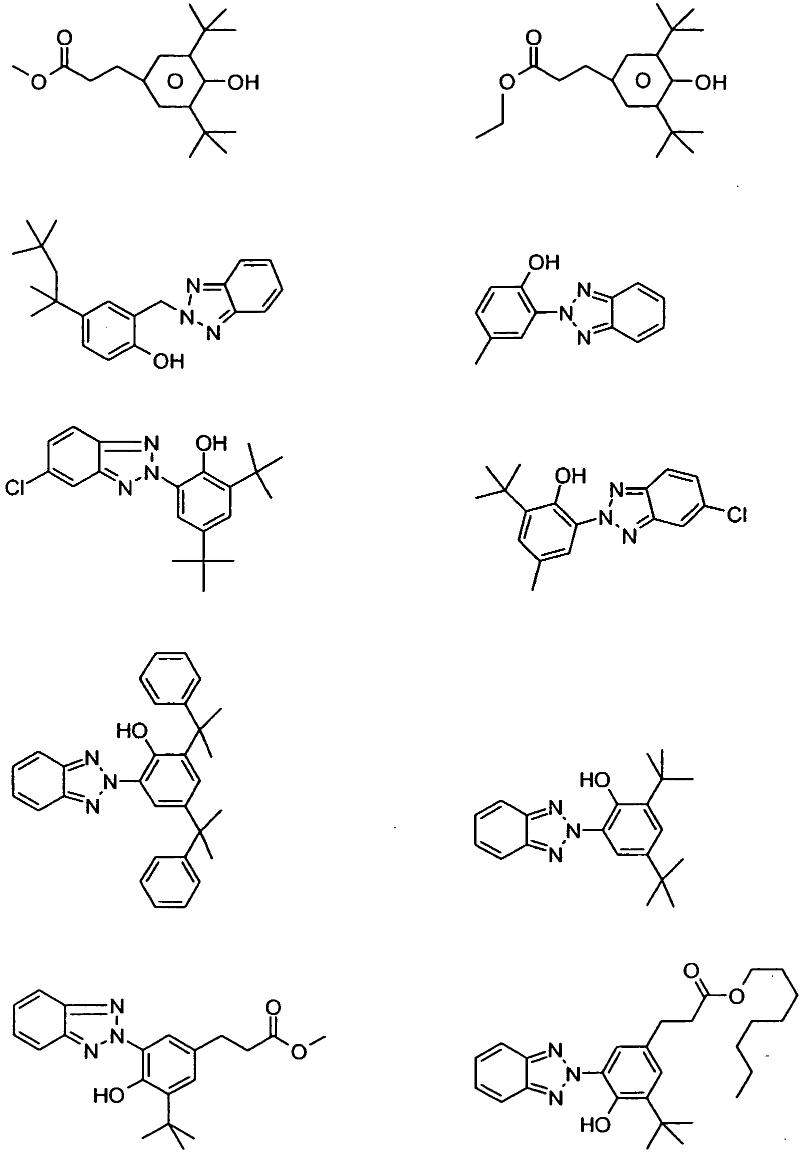

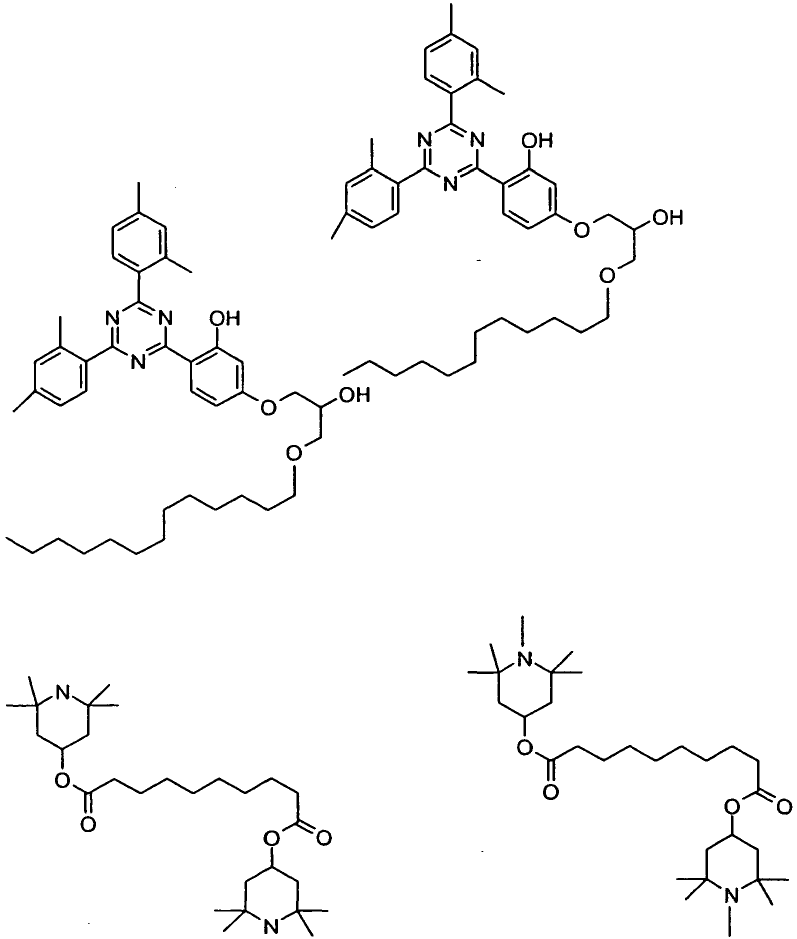

Die folgenden Beispiele sollen die Erfindung erläutern, ohne sie zu begrenzen. Der Fachmann wird in der Lage sein, den Beispielen Details zur Durchführung zu entnehmen, die in der allgemeinen Beschreibung nicht im Einzelnen aufgeführt sind, diese Details nach allgemeinen Fachkenntnissen zu verallgemeinern und auf seine spezielle Problemstellung anzuwenden.

Vor- und nachstehend bedeuten Prozentängaben Gewichtsprozent. Alle Temperaturen sind in Grad Celsius angegeben. Δn bedeutet optische Anisotropie (589 nm, 20 °C). Δε bezeichnet die dielektrische Anisotropie (Δε = ε_{∥} - ε_{⊥}, wobei ε_{∥} die Dielektrizitätskonstante parallel zu den Moleküllängsachsen und ε_{⊥} die Dielektrizitätskonstante senkrecht dazu bedeutet). Die Rotationsviskosität γ₁ (mPa·s) wird bei 20 °C bestimmt. V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,0fachen Wert von V₁₀. Δn bezeichnet die optische Anisotropie. Die elektrooptischen Daten werden in einer TN-Zelle im 1. Minimum (d.h. bei einem d · Δn-Wert von 0,5 µm) bei 20 °C gemessen, sofern nicht ausdrücklich etwas anderes angegeben wird.

### Beispiel M1

| | | | |
|---|---|---|---|
| CCQG-2-F | 7% | Klärpunkt [°C]: | 79 |
| CCQG-3-F | 7% | Δn [589 nm, 20°C]: | 0,069 |
| CCQU-2-F | 13% | Δε [1kHz, 20°C]: | 16,2 |
| CCQU-3-F | 14% | γ₁ [mPa·s, 20 °C]: | 166 |
| CCQU-5-F | 13% | V₁₀ [V]: | 0,93 |
| ACQU-2-F | 18% | | |
| ACQU-5-F | 15% | | |
| PUQU-2-F | 4% | | |
| CC-4-V | 3% | | |
| CDUQU-3-F | 6% | | |

### Beispiel M2

| | | | |
|---|---|---|---|
| CCQU-2-F | 13% | Klärpunkt [°C]: | 87 |
| CCQU-3-F | 14% | Δn [589 nm, 20°C]: | 0,078 |
| CCQU-5-F | 13% | Δε [1 kHz, 20 °C]: | 14,5 |
| ACQU-2-F | 8% | γ₁ [mPa·s, 20 °C]: | 137 |
| ACQU-5-F | 7% | V₁₀ [V]: | 1,07 |
| CDUQU-3-F | 10% | | |
| PUQU-2-F | 6% | | |
| CCGU-3-F | 8% | | |
| CC-4-V | 15% | | |
| CCG-V-F | 6 % | | |

### Beispiel M5

| | | | |
|---|---|---|---|
| CCP-1F.F.F | 6 % | Klärpunkt [°C]: | 80,5 |
| CCP-2F.F.F | 8 % | Δn [589 nm, 20 °C]: | 0,0805 |
| CCP-3F.F.F | 9 % | Δε [1 kHz, 20 °C]: | 18,0 |
| CCP-5F.F.F | 5 % | γ₁ [mPa·s, 20 °C]: | |
| PUQU-2-F | 6 % | V₁₀ [V]: | 0,90 |
| PUQU-3-F | 5 % | | |
| CCQU-2-F | 13 % | | |
| CCQU-3-F | 14 % | | |
| CCQU-5-F | 13 % | | |
| CDUQU-3-F | 15 % | | |
| CC-4-V | 4 % | | |
| CCPC-33 | 2 % | | |

### Beispiel M6

| | | | |
|---|---|---|---|
| CC-4-V | 18 % | Klärpunkt [°C]: | 75,5 |
| CC-3-V1 | 8 % | Δn [589 nm, 20 °C]: | 0,091 |
| CCQU-2-F | 13 % | Δε [1 kHz, 20 °C]: | 14,6 |
| CCQU-3-F | 12 % | γ₁ [mPa·s, 20 °C]: | 102 |
| CCQU-5-F | 10 % | V₁₀ [V]: | 1,10 |
| PUQU-2-F | 8 % | | |
| PUQU-3-F | 10 % | | |
| PGP-2-3 | 4 % | | |
| CDUQU-3-F | 12 % | | |
| CCGU-3-F | 5 % | | |

### Beispiel M7

| | | | |
|---|---|---|---|
| CC-4-V | 18 % | Klärpunkt [°C]: | 82,5 |
| CC-3-V1 | 8 % | Δn [589 nm, 20 °C]: | 0,093 |
| CCQU-2-F | 4 % | Δε [1kHz, 20 °C]: | 12,9 |
| CCQU-3-F | 11 % | γ₁ [mPa·s, 20 °C]: | 102 |
| CCQU-5-F | 10 % | V₁₀ [V]: | 1,20 |
| CCP-20CF3 | 6 % | | |
| CCP-30CF3 | 6 % | | |
| PUQU-2-F | 7 % | | |
| PUQU-3-F | 9 % | | |
| PGP-2-3 | 5 % | | |
| CDUQU-3-F | 12 % | | |
| CCGU-3-F | 4 % | | |

## Patentansprüche

1. Flüssigkristallines Medium, **dadurch gekennzeichnet, dass** es eine
oder mehrere Verbindungen der Formel I, 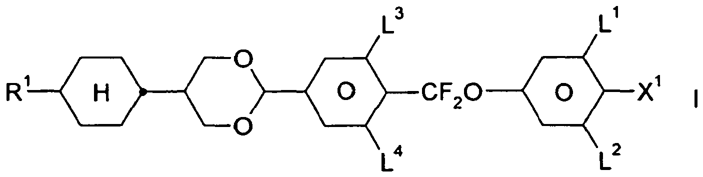 eine oder mehrere Verbindungen ausgewählt aus den Verbindungen der Formeln IA und IB, 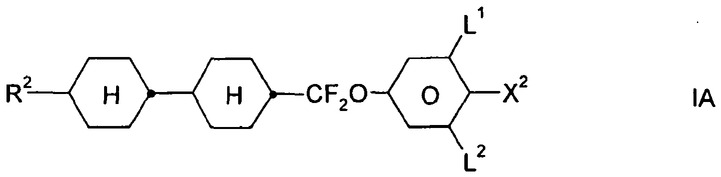 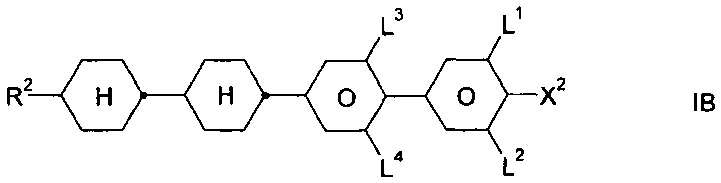 und
zusätzlich eine oder mehrere Verbindungen der Formeln Ri bis RVII, 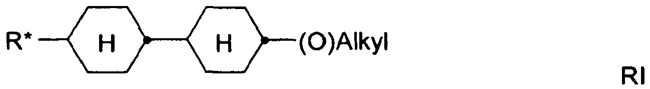 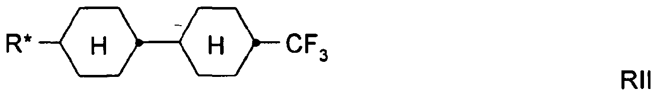 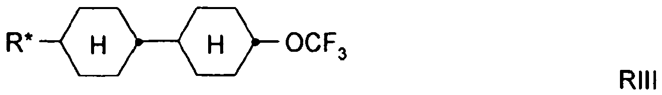 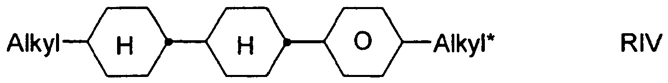 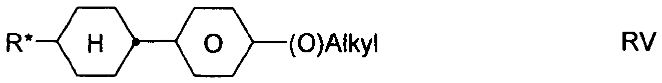 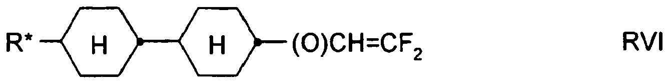 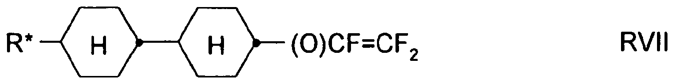 worin
R* n-Alkyl, Alkenyl, Alkoxy, Oxaalkyl, Fluoralkyl oder Alkenyloxy mit jeweils bis zu 9 C-Atomen,
Alkyl oder Alkyl* jeweils unabhängig voneinander ein geradkettiger oder verzweigter Alkylrest mit 1-9 C-Atomen,
(O) eine Einfachbindung oder -O-,
R¹, R² jeweils unabhängig voneinander H, einen halogenierten, durch CN substituierten oder unsubstituierten Alkylrest mit 1 bis 15 C-Atomen, wobei in diesen Resten auch eine oder mehrere CH₂-Gruppen jeweils unabhängig voneinander durch -C≡C-, -CO-, -CH=CH-, -O-, 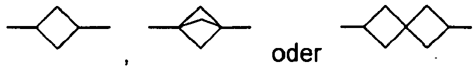 so ersetzt sein könnnen, dass O-Atome nicht direkt miteinander verknüpft sind,
X¹, X² jeweils unabhängig voneinander F, Cl, CN, SF₅, SCN, NCS, halogenierter Alkylrest, halogenierter Alkenylrest, halogenierter Alkoxyrest oder halogenierter Alkenyloxyrest mit jeweils bis zu 6 C-Atomen, und
L¹⁻⁴ jeweils unabhängig voneinander H oder F bedeuten.

2. Flüssigkristallines Medium nach Anspruch 1, **dadurch gekennzeichnet, dass** es ein, zwei oder mehr Verbindungen der Formeln I-1 bis I-5, 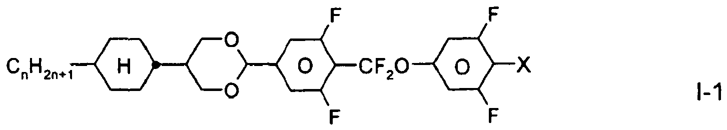 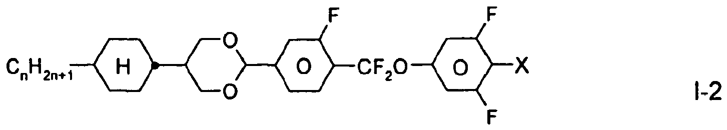 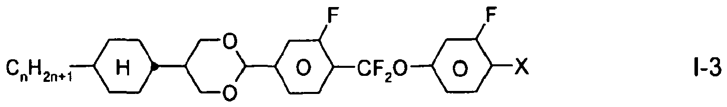 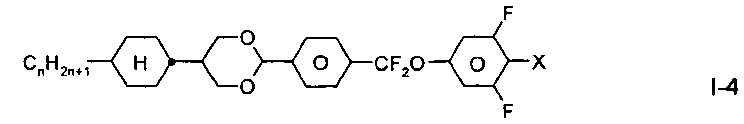 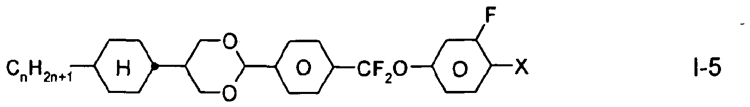 worin X wie in Anspruch 1 definiert ist und
n 1, 2, 3, 4, 5, 6 oder 7 bedeutet,
enthält.

3. Flüssigkristallines Medium nach Anspruch 1 oder 2, **dadurch gekennzeichnet, dass** es eine oder mehrere Verbindungen der Formeln IA-1 bis IA-4, 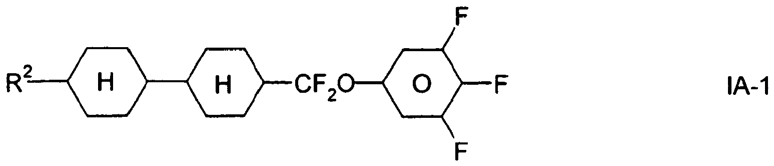 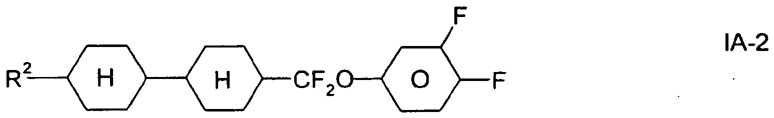 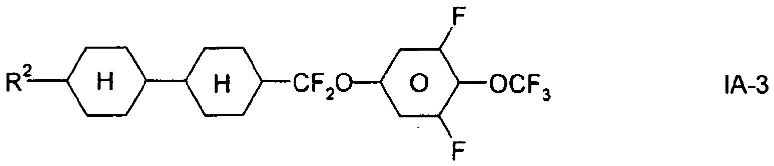 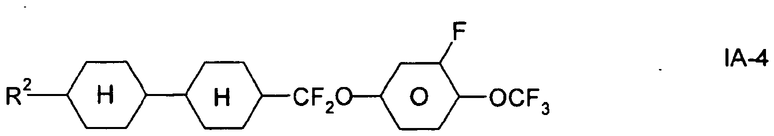 worin R² wie in Anspruch 1 definiert ist,
enthält.

4. Flüssigkristallines Medium nach einem oder mehreren der Ansprüche 1 bis 3, **dadurch gekennzeichnet, dass** es eine oder mehrere Verbindungen der Formeln IB-1 bis IB-4, 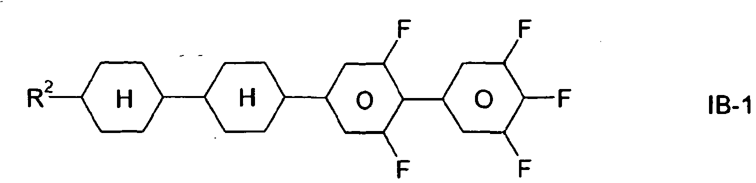 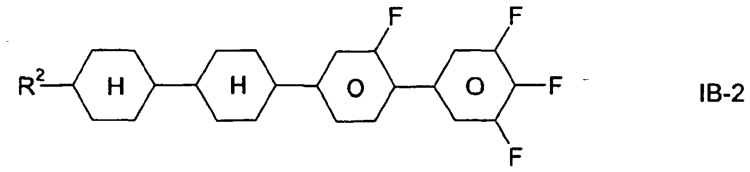 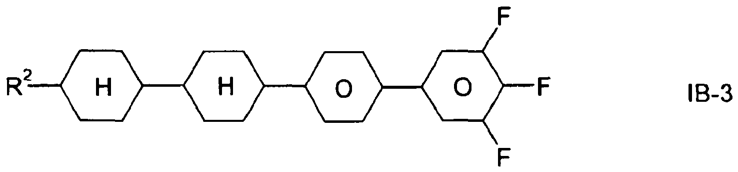 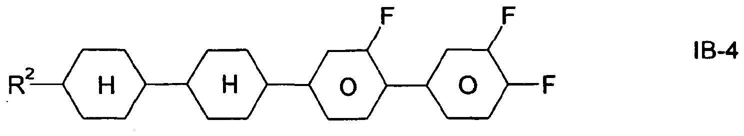 worin R² wie in Anspruch 1 definiert ist,
enthält.

5. Flüssigkristallines Medium nach einem oder mehreren der Ansprüche 1 bis 4, **dadurch gekennzeichnet, dass** es zusätzlich eine oder mehrere Verbindungen ausgewählt aus der Gruppe bestehend aus den allgemeinen Formeln II, III, IV, V und VI enthält, 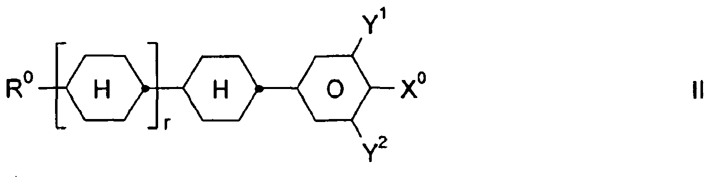 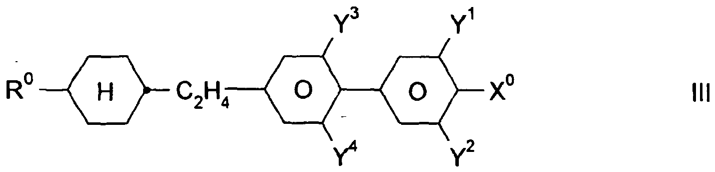 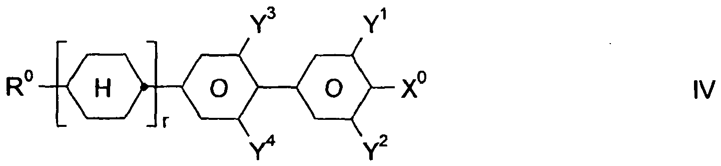 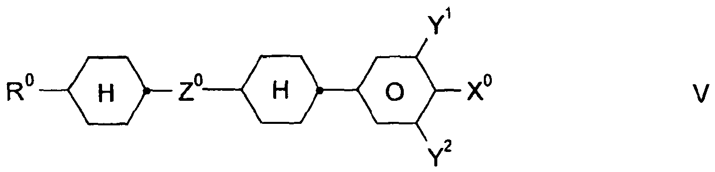 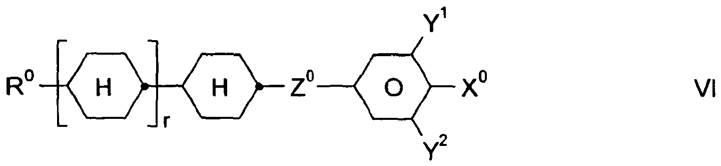 worin die einzelnen Reste die folgenden Bedeutungen haben:
R⁰ H, n-Alkyl, Alkoxy, Oxaalkyl, Fluoralkyl, Alkenyloxy oder Alkenyl mit jeweils bis zu 9 C-Atomen,
X⁰ F, Cl, halogeniertes Alkyl, Alkenyl, Alkenyloxy oder Alkoxy mit bis zu 6 C-Atomen,
Z⁰ -C₂F₄-, -CF=CF-, -CH=CF-, -CF=CH-, -C₂H₄-, -CH=CH-, -O(CH₂)₃-, -(CH₂)₃O-, -(CH₂)₄-, -CF₂O-,-OCF₂-, -OCH₂- oder -CH₂O-,
Y¹⁻⁴ jeweils unabhängig voneinander H oder F, und
r 0 oder 1.

6. Flüssigkristallines Medium nach einem oder mehreren der Ansprüche 1 bis 5, **dadurch gekennzeichnet, dass** der Anteil an Verbindungen der Formeln IA/IB und I bis VI zusammen im Gesamtgemisch mindestens 50 Gew.% beträgt.

7. Flüssigkristallines Medium nach einem oder mehreren der Ansprüche 1 bis 6, **dadurch gekennzeichnet, dass** es zusätzlich eine oder mehrere Verbindungen der Formeln Ea bis Ef enthält, 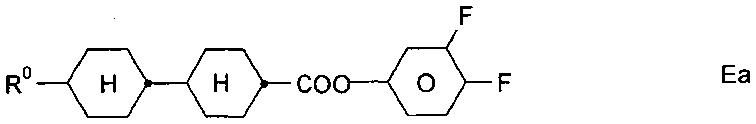 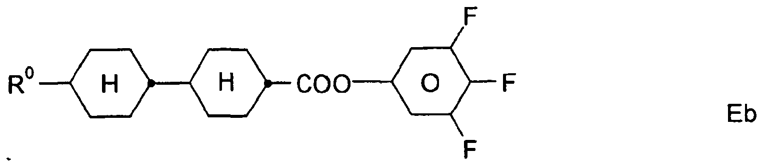 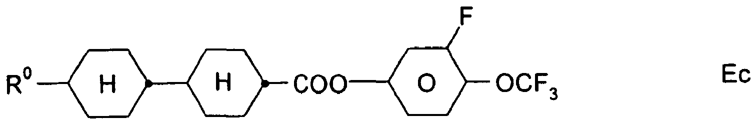 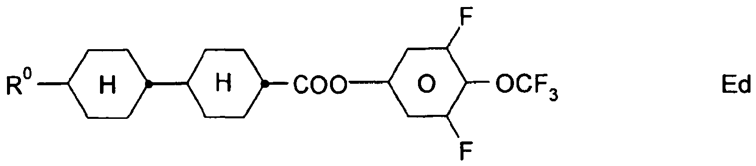 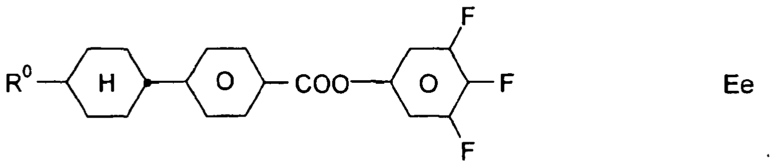 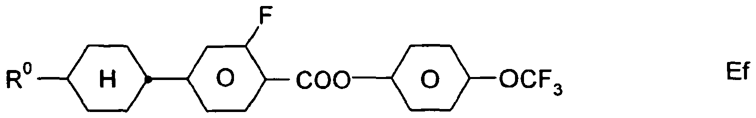 worin R⁰ die in Anspruch 4 angegebene Bedeutung hat,
enthält.

8. Flüssigkristallines Medium nach einem oder mehreren der Ansprüche 1 bis 7, **dadurch gekennzeichnet, dass** es eine oder mehrere Verbindungen der Formeln IIa bis IIg, 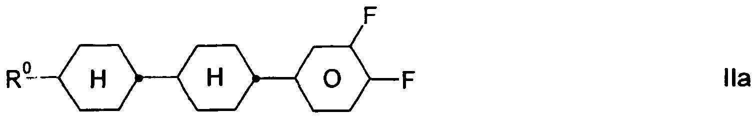 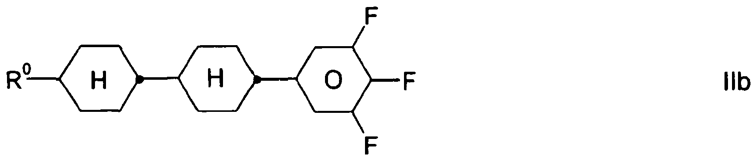 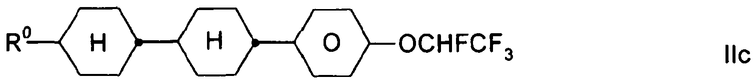 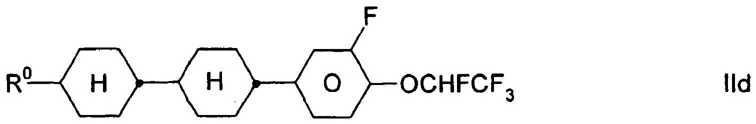 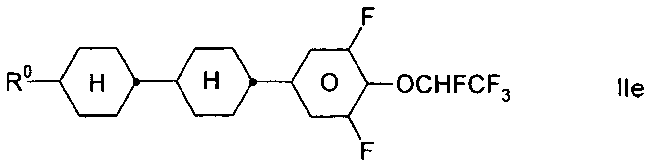 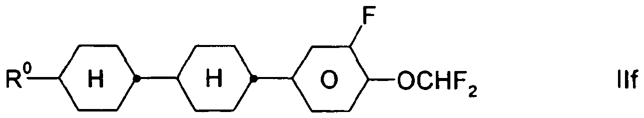 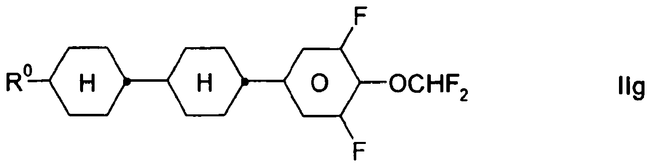 worin R⁰ die in Anspruch 4 angegebene Bedeutung hat,
enthält.

9. Flüssigkristallines Medium nach einem oder mehreren der Ansprüche 1 bis 8, **dadurch gekennzeichnet, dass** der Anteil an Verbindungen der Formel I im Gesamtgemisch 5 bis 40 Gew.% beträgt.

10. Verwendung des flüssigkristallinen Mediums nach einem oder mehreren der Ansprüche 1 bis 9 für elektrooptische Zwecke.

11. Elektrooptische Flüssigkristallanzeige enthaltend ein flüssigkristallines Medium nach einem oder mehreren der Ansprüche 1 bis 9.

12. Verfahren zur Herstellung eines flüssigkristallinen Mediums nach einem oder mehreren der Ansprüche 1 bis 9, **dadurch gekennzeichnet, dass** man jeweils eine oder mehrere der Verbindungen der Formel I, eine oder mehrere Verbindungen ausgewählt aus den Formeln IA und IB, und zusätzlich eine oder mehrere Verbindungen der Formeln RI bis RVII mit weiteren flüssigkristallinen Cokomponenten mischt und gegebenenfalls Additive zugibt.

## Claims

1. Liquid-crystalline medium, **characterised in that** it comprises one or
more compounds of the formula I, 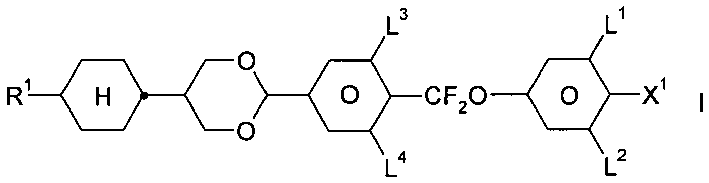 one or more compounds selected from the compounds of the formulae IA and IB, 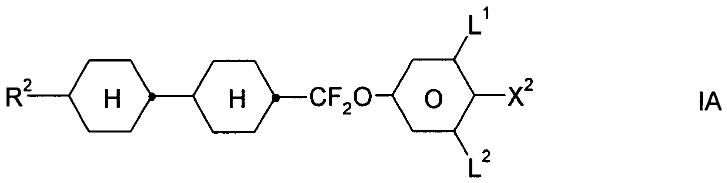 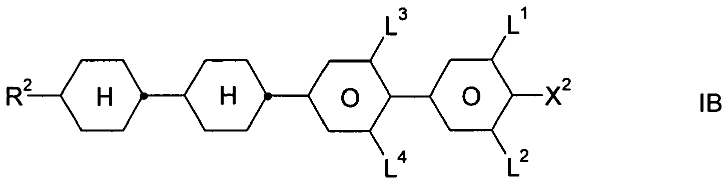 and
additionally one or more compounds of the formulae RI to RVII, 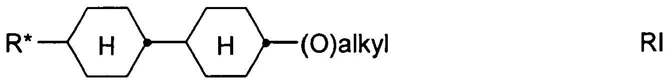 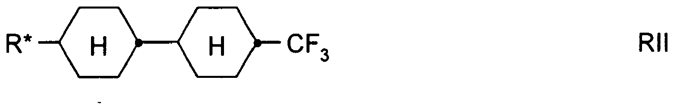 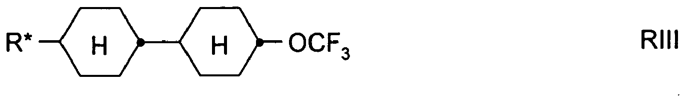 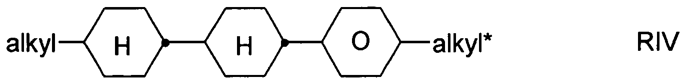 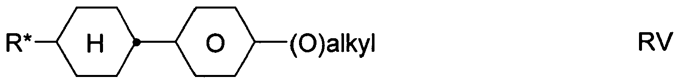 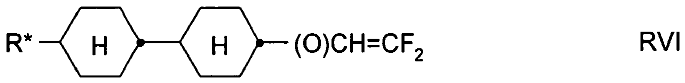 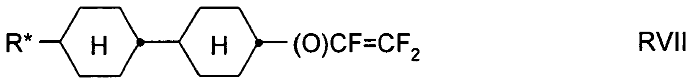 in which
R* denotes n-alkyl, alkenyl, alkoxy, oxaalkyl, fluoroalkyl or alkenyloxy, each having up to 9 C atoms,
alkyl or alkyl* in each case, independently of one another, denotes a straight-chain or branched alkyl radical having 1-9 C atoms,
(O) denotes a single bond or -O-,
R¹, R² each, independently of one another, denote H, a halogenated, CN-substituted or unsubstituted alkyl radical having 1 to 15 C atoms, where, in addition, one or more CH₂ groups in these radicals may each be replaced, independently of one another, by -C≡C-, -CO-, -CH=CH-, -O-, 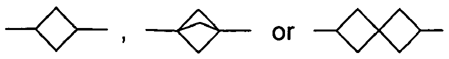 in such a way that O atoms are not linked directly to one another,
X¹, X² each, independently of one another, denote F, Cl, CN, SF₅, SCN, NCS, a halogenated alkyl radical, a halogenated alkenyl radical, a halogenated alkoxy radical or a halogenated alkenyloxy radical, each having up to 6 C atoms, and
L¹⁻⁴ each, independently of one another, denote H or F.

2. Liquid-crystalline medium according to Claim 1, **characterised in that** it comprises one, two or more compounds of the formulae I-1 to I-5, 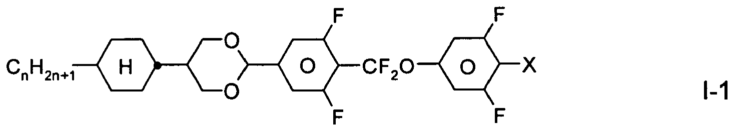 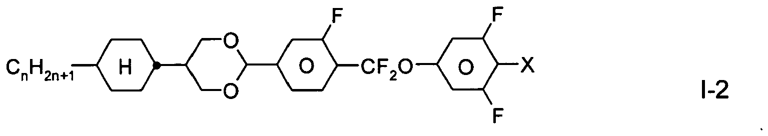 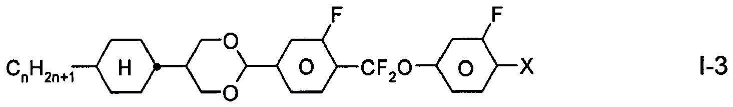 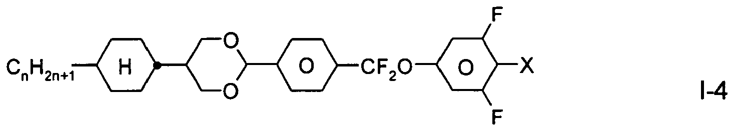 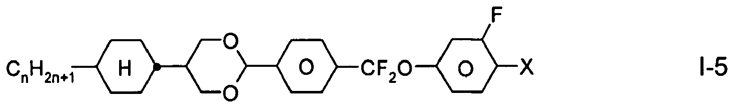 in which X is as defined in Claim 1 and
n denotes 1, 2, 3, 4, 5, 6 or 7.

3. Liquid-crystalline medium according to Claim 1 or 2, **characterised in that** it comprises one or more compounds of the formulae IA-1 to IA-4, 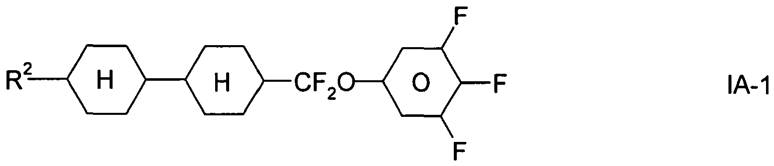 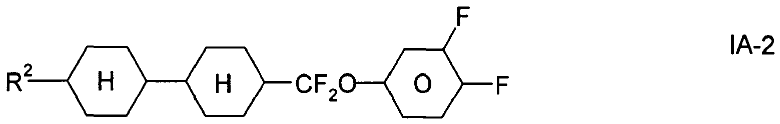 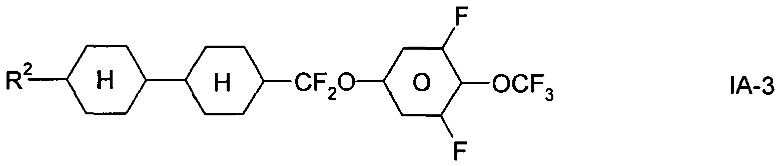 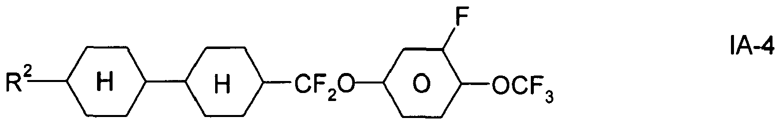 in which R² is as defined in Claim 1.

4. Liquid-crystalline medium according to one or more of Claims 1 to 3, **characterised in that** it comprises one or more compounds of the formulae IB-1 to IB-4, 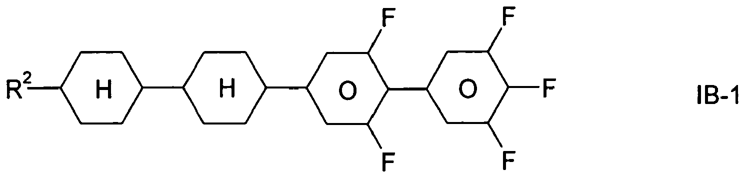 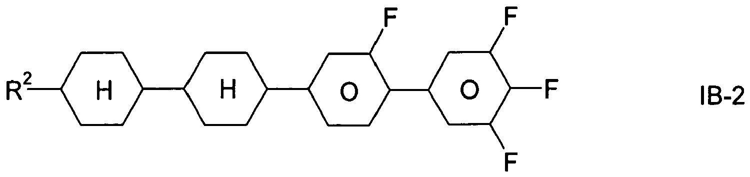 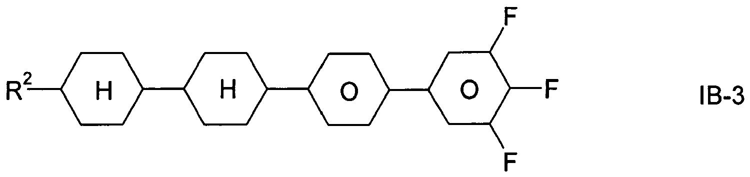 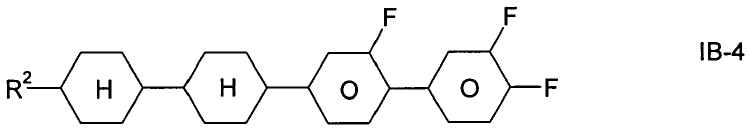 in which R² is as defined in Claim 1.

5. Liquid-crystalline medium according to one or more of Claims 1 to 4, **characterised in that** it additionally comprises one or more compounds selected from the group consisting of the general formulae II, III, IV, V and VI, 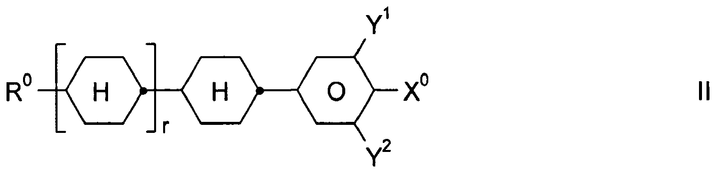 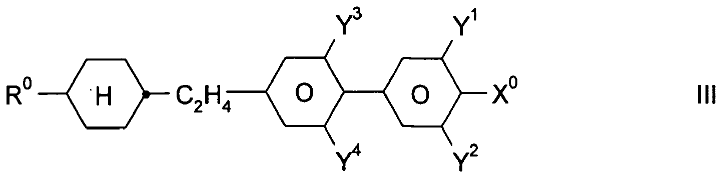 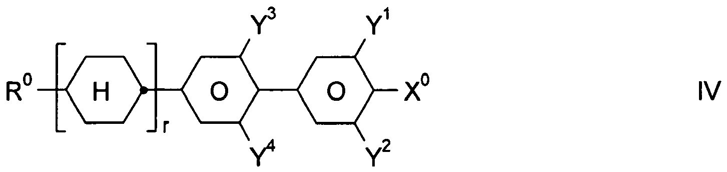 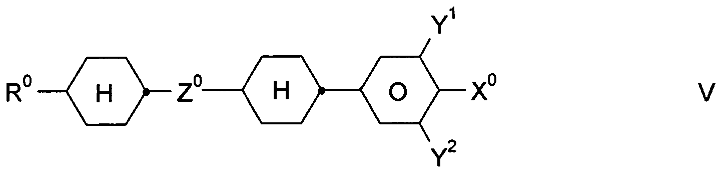 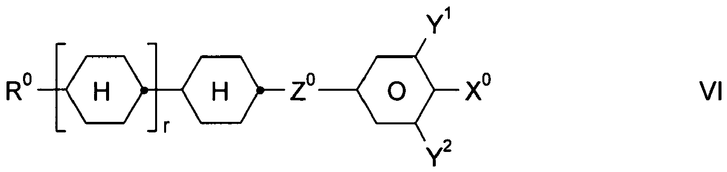 in which the individual radicals have the following meanings:
R⁰ denotes H, n-alkyl, alkoxy, oxaalkyl, fluoroalkyl, alkenyloxy or alkenyl, each having up to 9 C atoms,
X⁰ denotes F, Cl, halogenated alkyl, alkenyl, alkenyloxy or alkoxy having up to 6 C atoms,
Z⁰ denotes -C₂F₄-, -CF=CF-, -CH=CF-, -CF=CH-, -C₂H₄-, -CH=CH-, -O(CH₂)₃-, -(CH₂)₃O-, -(CH₂)₄-, -CF₂O-, -OCF₂-, -OCH₂- or -CH₂O-,
Y¹⁻⁴ each, independently of one another, denote H or F, and
r denotes 0 or 1.

6. Liquid-crystalline medium according to one or more of Claims 1 to 5, **characterised in that** the proportion of compounds of the formulae IA/IB and I to VI together in the mixture as a whole is at least 50% by weight.

7. Liquid-crystalline medium according to one or more of Claims 1 to 6, **characterised in that** it additionally comprises one or more compounds of the formulae Ea to Ef, 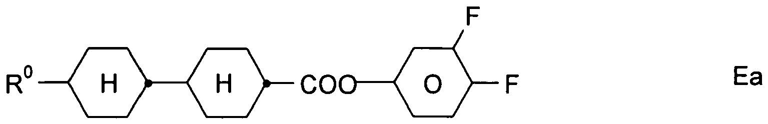 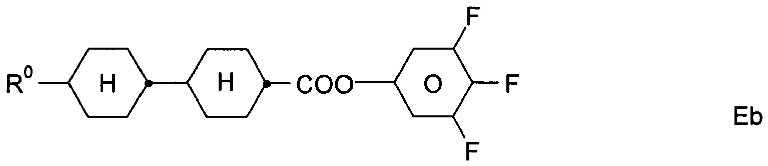 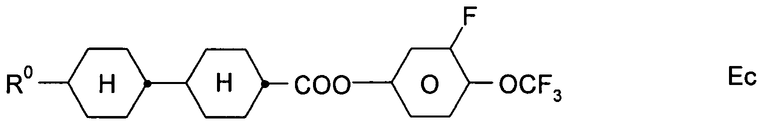 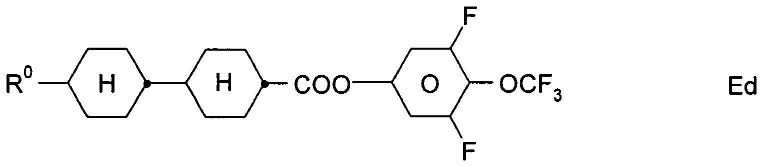 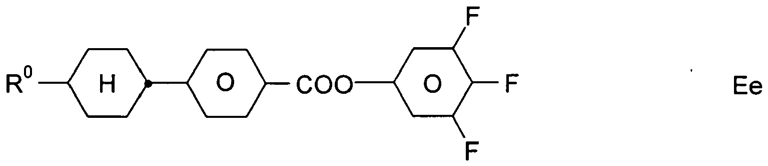 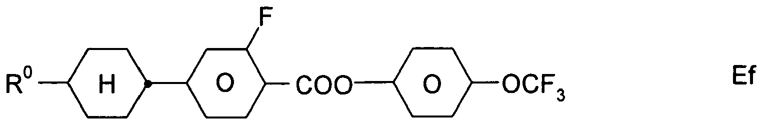 in which R⁰ has the meaning indicated in Claim 5.

8. Liquid-crystalline medium according to one or more of Claims 1 to 7, **characterised in that** it comprises one or more compounds of the formulae IIa to IIg, 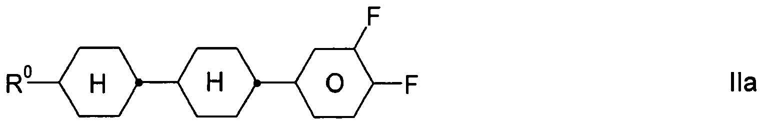 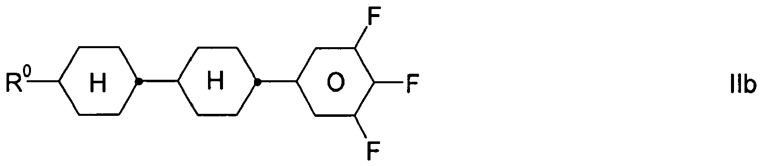 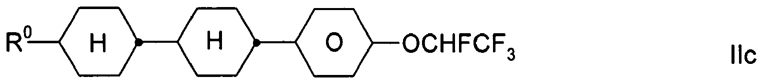 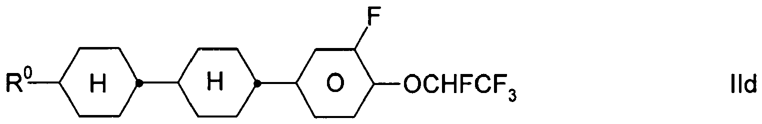 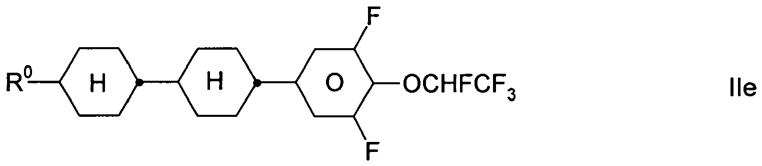 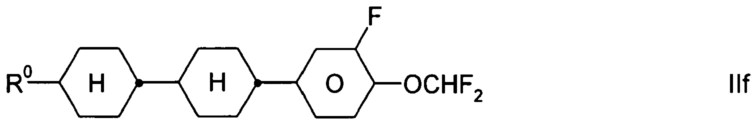 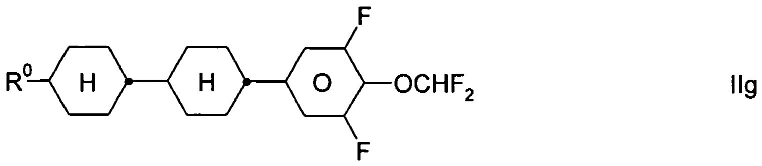 in which R⁰ has the meaning indicated in Claim 5.

9. Liquid-crystalline medium according to one or more of Claims 1 to 8, **characterised in that** the proportion of compounds of the formula I in the mixture as a whole is 5 to 40% by weight.

10. Use of the liquid-crystalline medium according to one or more of Claims 1 to 9 for electro-optical purposes.

11. Electro-optical liquid-crystal display containing a liquid-crystalline medium according to one or more of Claims 1 to 9.

12. Process for the preparation of a liquid-crystalline medium according to one or more of Claims 1 to 9, **characterised in that** in each case one or more of the compounds of the formula I, one or more compounds selected from the formulae IA and IB, and additionally one or more compounds of the formulae RI to RVII are mixed with further liquid-crystalline co-components, and additives are optionally added.

## Revendications

1. Milieu cristallin liquide, **caractérisé en ce qu'**il comprend un ou plusieurs composés de la formule I, 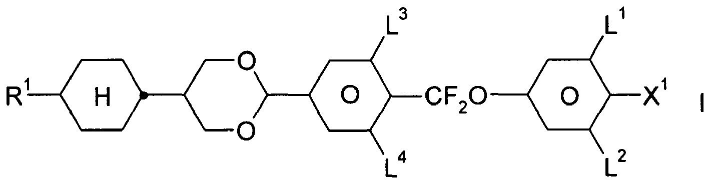 un ou plusieurs composés choisis parmi les composés des formules IA et IB, 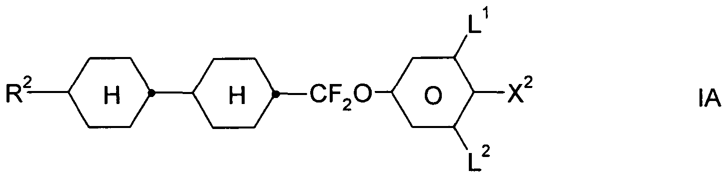 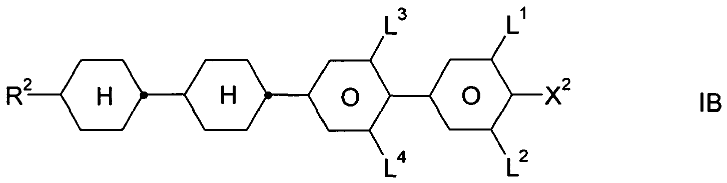 et
additionnellement, un ou plusieurs composés des formules RI à RVII, 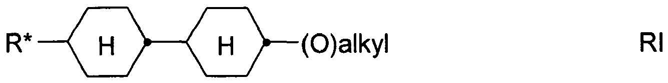 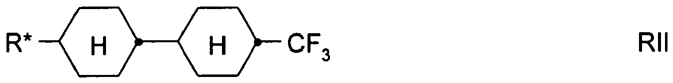 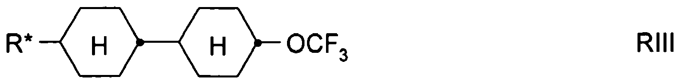 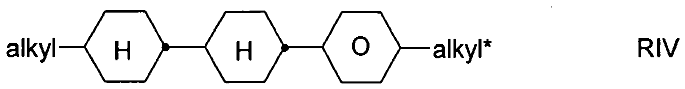 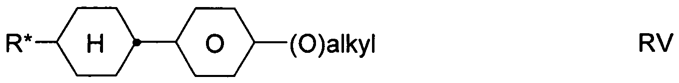 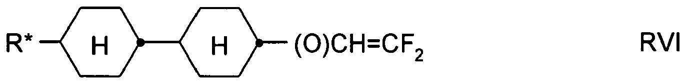 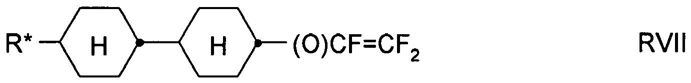 dans lesquelles
R* représente n-alkyle, alkényle, alcoxy, oxaalkyle, fluoroalkyle ou alkényloxy, dont chacun comporte jusqu'à 9 atomes de C
alkyl ou alkyl* représente, dans chaque cas indépendamment l'un de l'autre, un radical alkyle en chaîne droite ou ramifié comportant 1-9 atomes de C,
(O) représente une liaison simple ou -O-,
R¹, R² représentent, chacun indépendamment de l'autre, H, un radical alkyle halogéné, CN-substitué ou non substitué comportant de 1 à 15 atomes de C, où, en outre, un ou plusieurs groupes CH₂ dans ces radicaux peuvent chacun être remplacés, indépendamment des autres, par -C≡C-, -CO-, -CH=CH-, -O-, 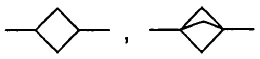 ou 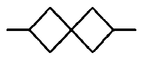 de telle sorte que des atomes de O ne soient pas liés directement les uns aux autres,
X¹, X² représentent, chacun indépendamment de l'autre, F, Cl, CN, SF₅, SCN, NCS, un radical alkyle halogéné, un radical alkényle halogéné, un radical alcoxy halogéné ou un radical alkényloxy halogéné, chacun comportant jusqu'à 6 atomes de C, et
L¹⁻⁴ représentent, chacun indépendamment des autres, H ou F.

2. Milieu cristallin liquide selon la revendication 1, **caractérisé en ce qu'**il comprend un, deux composés ou plus des formules I-1 à I-5, 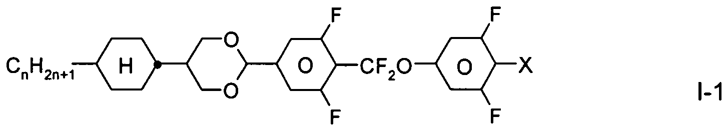 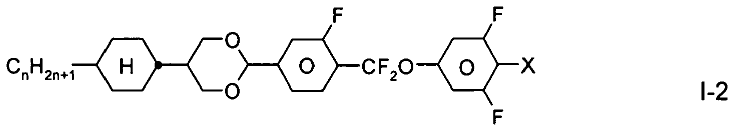 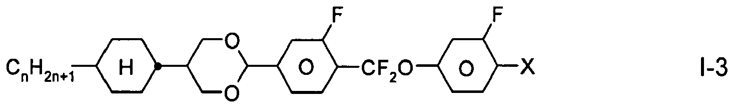 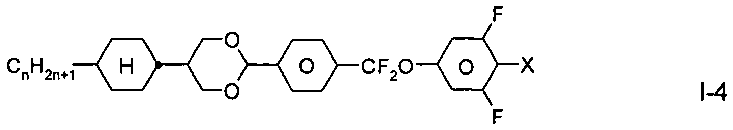 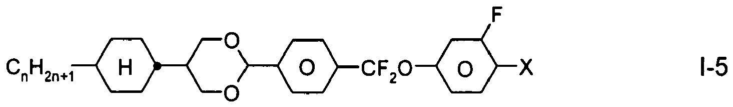 dans lesquelles X est comme défini selon la revendication 1 et
n représente 1, 2, 3, 4, 5, 6 ou 7.

3. Milieu cristallin liquide selon la revendication 1 ou 2, **caractérisé en ce**
**qu'**il comprend un ou plusieurs composés des formules IA-1 à IA-4, 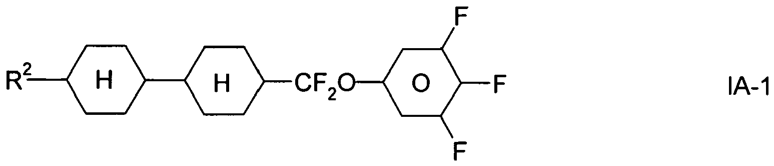 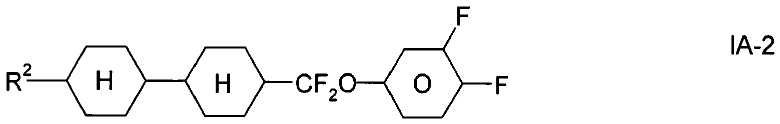 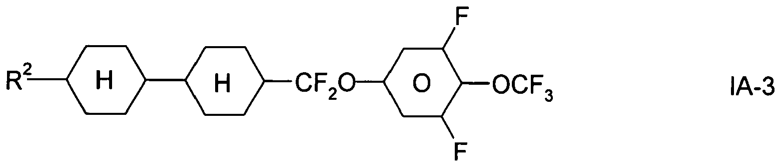 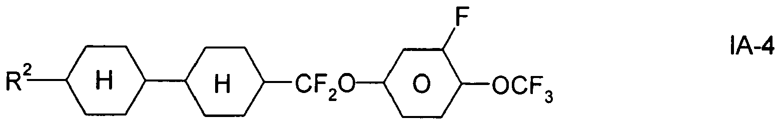 dans lesquelles R² est comme défini selon la revendication 1.

4. Milieu cristallin liquide selon une ou plusieurs des revendications 1 à 3, **caractérisé en ce qu'**il comprend un ou plusieurs composés des formules IB-1 à IB-4, 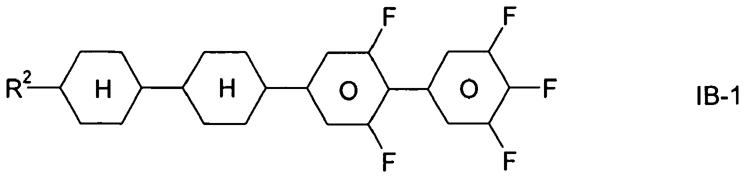 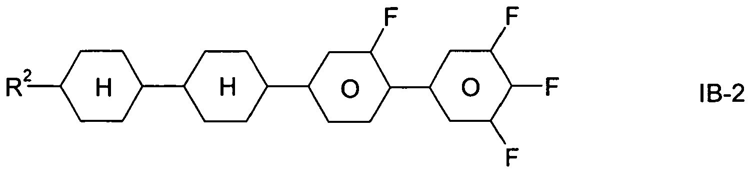 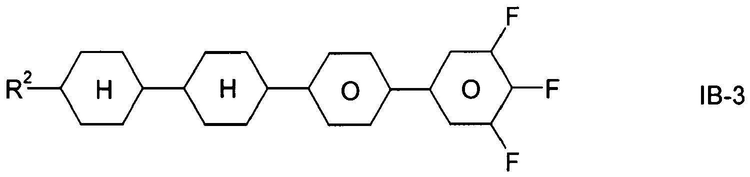 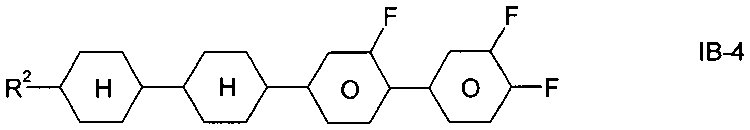 dans lesquelles R² est comme défini selon la revendication 1.

5. Milieu cristallin liquide selon une ou plusieurs des revendications 1 à 4, **caractérisé en ce qu'**il comprend additionnellement un ou plusieurs composés choisis parmi le groupe constitué par les formules générales II, III, IV, V et VI, 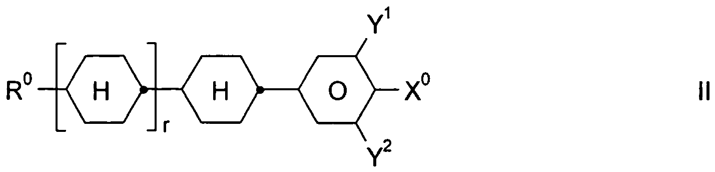 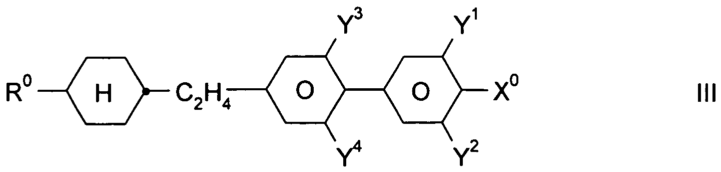 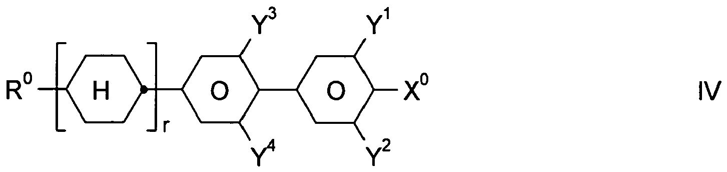 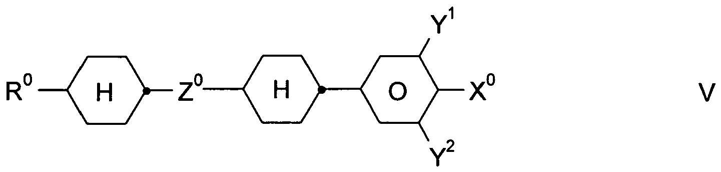 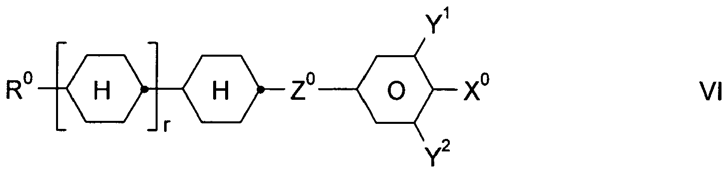 dans lesquelles les radicaux individuels présentent les significations qui suivent:
R⁰ représente H, n-alkyle, alcoxy, oxaalkyle, fluoroalkyle, alkényloxy ou alkényle, chacun comportant jusqu'à 9 atomes de C,
X⁰ représente F, CI, alkyle, alkényle, alkényloxy ou alcoxy halogéné comportant jusqu'à 6 atomes de C,
Z⁰ représente -C₂F₄-, -CF=CF-, -CH=CF-, -CF=CH-, -C₂H₄- , -CH=CH-, -O(CH₂)₃-, -(CH₂)₃O-, -(CH₂)₄-, -CF₂O-, -OCF₂-, -OCH₂- ou -CH₂O-,
Y¹⁻⁴ représentent, chacun indépendamment des autres, H ou F, et
r représente 0 ou 1.

6. Milieu cristallin liquide selon une ou plusieurs des revendications 1 à 5, **caractérisé en ce que** la proportion de composés des formules IA/IB et I à VI ensemble dans le mélange pris dans sa globalité est d'au moins 50% en poids.

7. Milieu cristallin liquide selon une ou plusieurs des revendications 1 à 6, **caractérisé en ce qu'**il comprend additionnellement un ou plusieurs composés des formules Ea à Ef, 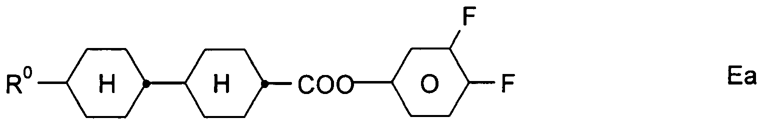 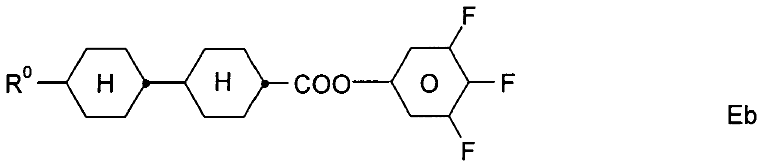 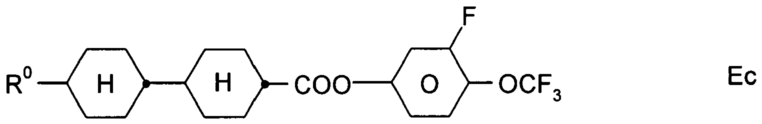 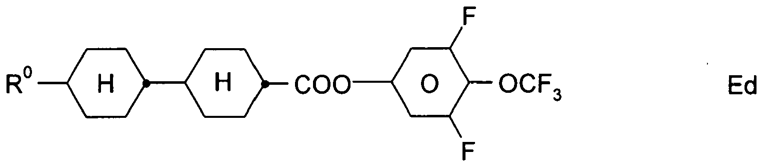 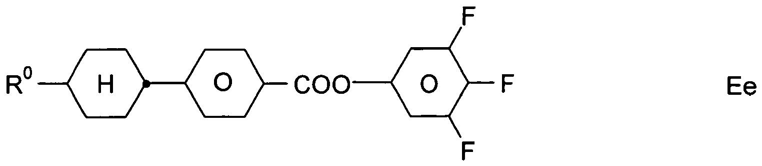 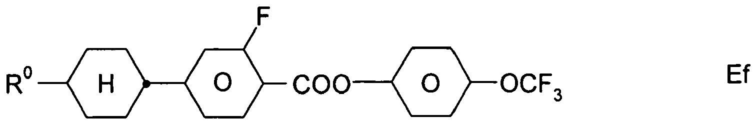 dans lesquelles R⁰ présente la signification indiquée selon la revendication 5.

8. Milieu cristallin liquide selon une ou plusieurs des revendications 1 à 7, **caractérisé en ce qu'**il comprend additionnellement un ou plusieurs composés des formules IIa à IIg, 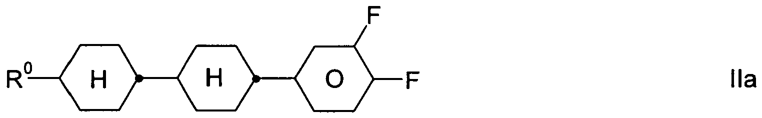 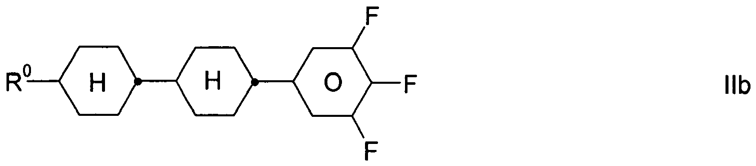 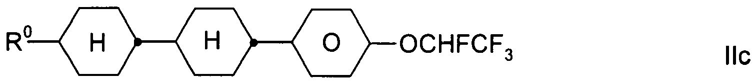 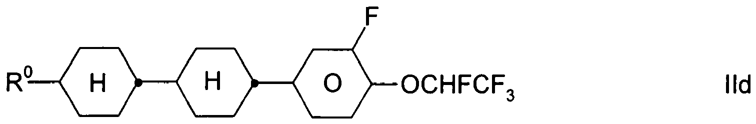 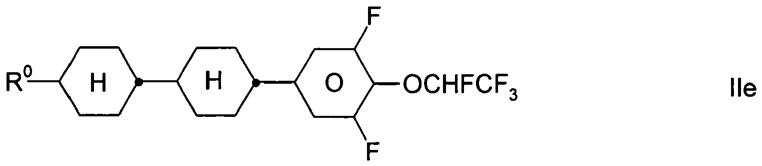 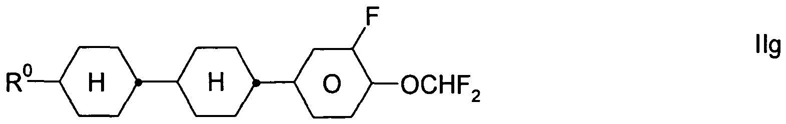 dans lesquelles R⁰ présente la signification indiquée selon la revendication 5.

9. Milieu cristallin liquide selon une ou plusieurs des revendications 1 à 8, **caractérisé en ce que** la proportion de composés de la formule I dans le mélange pris dans sa globalité est de 5 à 40% en poids.

10. Utilisation du milieu cristallin liquide selon une ou plusieurs des revendications 1 à 9 à des fins électro-optiques.

11. Affichage à cristaux liquides électro-optique contenant un milieu cristallin liquide selon une ou plusieurs des revendications 1 à 9.

12. Procédé pour la préparation d'un milieu cristallin liquide selon une ou plusieurs des revendications 1 à 9, **caractérisé en ce que**, dans chaque cas, un ou plusieurs des composés de la formule I, un ou plusieurs composés choisis parmi les formules IA et IB, et additionnellement, un ou plusieurs composés des formules RI à RVII sont mélangés avec d'autres co-composants cristallins liquides, et des additifs sont en option ajoutés.
